# EUROPÄISCHE PATENTSCHRIFT

(11) **EP 3 906 607 B1**
(45) Veröffentlichungstag und Bekanntmachung des Hinweises auf die Patenterteilung: **04.05.2022**
(21) Anmeldenummer: 20716165.4
(22) Anmeldetag: 05.03.2020
(51) Int. Cl.: H02K 3/12, H02K 15/04

(54) **BIEGEVERFAHREN, HERSTELLVERFAHREN, BIEGEVORRICHTUNG UND HERSTELLVORRICHTUNG FÜR EINE WELLENWICKLUNGSMATTE SOWIE DAMIT ERHÄLTLICHE WELLENWICKLUNGSMATTE**
BENDING METHOD, MANUFACTURING METHOD, BENDING DEVICE AND MANUFACTURING DEVICE FOR A WAVE WINDING MAT AND WAVE WINDING MAT OBTAINABLE WITH SAME
PROCÉDÉ DE CINTRAGE, PROCÉDÉ DE FABRICATION, DISPOSITIF DE CINTRAGE ET DISPOSITIF DE FABRICATION POUR UN TAPIS D'ENROULEMENT ONDULÉ AINSI QUE TAPIS D'ENROULEMENT ONDULÉ OBTENU AVEC CE PROCÉDÉ

(30) Priorität: 05.03.2019 DE 102019001478
(43) Veröffentlichungstag der Anmeldung: 10.11.2021
(73) Patentinhaber: Grob-Werke GmbH & Co. KG, 87719 Mindelheim (DE)
(72) Erfinder: SCHMID, Frederik, 89281 Altenstadt (DE); RAUSCHER, Ralf, 87748 Fellheim (DE); HAGGENMÜLLER, Tobias, 87647 Unterthingau (DE)
(74) Vertreter: KASTEL Patentanwälte PartG mbB
(86) Internationale Anmeldenummer: PCT/DE2020/100151
(87) Internationale Veröffentlichungsnummer: WO 2020/177815

(56) Entgegenhaltungen:
- DE-A1-102017 104 932
- US-A1- 2010 125 999
- US-A1- 2017 324 294

## Beschreibung

Die Erfindung betrifft ein Biegeverfahren zum Biegen von Drahtabschnitten für eine Wellenwicklungsmatte zum Bilden einer Spulenwicklung eines Bauteils einer elektrischen Maschine. Weiter betrifft die Erfindung ein Herstellverfahren zum Herstellen einer Wellenwicklungsmatte zum Bilden einer Spulenwicklung eines Bauteils einer elektrischen Maschine unter Verwendung eines solchen Biegeverfahrens. Weiter betrifft die Erfindung eine Biegevorrichtung zur Verwendung bei der Herstellung einer Wellenwicklungsmatte zum Bilden einer Spulenwicklung eines Bauteils einer elektrischen Maschine. Weiter betrifft die Erfindung eine Herstellvorrichtung zum Herstellen einer Wellenwicklungsmatte zum Bilden einer Spulenwicklung eines Bauteils einer elektrischen Maschine, die eine derartige Biegevorrichtung umfasst. Schließlich betrifft die Erfindung ein Computerprogrammprodukt für eine derartige Herstellvorrichtung.

Zum technologischen Hintergrund der Erfindung wird auf folgende Literaturstellen verwiesen:
[1] US 2010/231083 A1
[2] WO 2017/148619 A1
[3] EP 1 270 104 A1
[4] US 2016/052041 A1
[5] US 2009/276997 A1
[6] DE 10 2017 127 634 A1
[7] WO 2019/166061 A1
[8] DE 10 2017 120 559 A1
[9] WO 2016/174542 A1
[10] DE 10 2015 120 661 A1
[11] DE 10 2015 120 963 A1
[12] EP 3 182 568 A1
[13] DE 10 2017 104 932 A1
[14] US 2017/324294 A1
[15] US 2010/125999 A1

Die vorliegende Erfindung liegt auf dem Gebiet der Herstellung von Elektromotoren oder sonstigen elektrischen Maschinen, wie beispielsweise Generatoren, die für hohe Leistungen, zuverlässigen Betrieb und hohe Effizienz ausgelegt sind. Insbesondere sollen Elektromotoren hergestellt werden, die als Fahrmotoren von Elektrofahrzeugen oder Hybridfahrzeugen einsetzbar sind und beispielsweise eine Nennleistung zwischen 20 kW und 400 kW aufweisen. Es ist zum Aufbau von Statoren derartiger leistungsfähiger elektrischer Maschinen vorteilhaft, eine möglichst hohe Spulendichte bereitzustellen. Hierzu ist es aus zumindest einigen der vorerwähnten Literaturstellen bekannt, eine aus mehreren Drähten gebildete Spulenwicklungsmatte bereitzustellen. Bei der Spulenwicklungsmatte sind Drahtsegmente eines jeden Drahtes mit Biegungen versehen, die geradlinige Drahtabschnitte verbinden, welche in radial offene Nuten eines Haltekörpers, wie insbesondere dem Hauptkörper eines Stators oder eines Rotors, eingefügt werden können. Somit befinden sich im fertigen Bauteil geradlinige Drahtabschnitte in den Nuten. Geradlinigen Drahtabschnitte sind durch Umbiegungen verbunden, die aus dem Bauteil hervorstehen und als Wicklungsköpfe bezeichnet werden.

Um einen besonders hohen Füllgrad zu erreichen, werden die Spulenwicklungen insbesondere aus Drähten mit rechteckigem Querschnitt hergestellt.

Um die Grundform einer Spulenwicklung herzustellen, gibt es verschiedene Wickelverfahren. Die Literaturstellen [1] bis [7] betreffen das sogenannte Flachwickeln. Beim Flachwickeln ist das Ziel, den jeweiligen Draht mit rechteckigem Querschnitt möglichst schonend ohne Torsion, insbesondere in einer Ebene, in die gewünschte Form zu biegen. Hierzu wird jeder einzelne Draht in einer Ebene mäanderförmig gebogen. Mehrere dieser mäanderförmig gebogenen Drähte werden zu einer Wellenwicklungsmatte zusammengefügt. Vorteil des Flachwickelns ist die schonende Biegung von unrunden, insbesondere rechteckigen Drähten. Herausforderungen dabei sind die geringen Taktzeiten aufgrund der Einzelbiegungen, das Zusammenfügen der gebogenen Drähte, die meist nur rechtwinklige oder undefinierte mögliche Formung der Wicklungsköpfe, mögliche unerwünschte Verformungen in den parallelen geradlinigen Drahtabschnitten, da diese oft frei im Raum gebogen werden, sowie mögliche Relativbewegungen zwischen Biegevorrichtungselementen und Draht, was zu Beschädigungen einer Drahtisolierung führen kann. Eine weitere Herausforderung ist, dass nur bestimmte Wickelschemata möglich sind.

Aus [8] bis [14] ist es bekannt, eine Spulenwicklungsmatte aus parallel geführten Drähten zu wickeln, insbesondere um einen Wickelkern, wie z.B. ein sogenanntes Wickelschwert. Eine derartige durch Wickeln eines Drahtpakets gebildete Spulenwicklungsmatte wird im Folgenden als Wickelmatte bezeichnet. Eine derartige Herstellweise einer Spulenwicklungsmatte wird auch als Schwertwicklung bezeichnet. Mit einer solchen Herstellweise können mehrere Drähte einer Spulenwicklungsmatte gleichzeitig gebogen werden, was besondere Vorteile hinsichtlich der Taktzeiten bzw. der insgesamt benötigten Herstellzeit hat. Herausforderungen bei derartigen Wicklungsverfahren sind größere Biegebelastungen auf die einzelnen Drähte aufgrund der inhärenten Torsion, insbesondere bei unrunden wie rechteckigen Drähten, Beschränkungen bei der Wicklungskopfform sowie Beschränkungen bei möglichen Wicklungsschemata. Aus [15] ist eine Herstellung einer Spulenwicklungsmatte durch Flechten der einzelnen Drähte bekannt.

Die Erfindung hat sich zur Aufgabe gestellt, Verfahren und Vorrichtungen zur Verfügung zu stellen, mit denen Spulenwicklungsmatten zeitsparend, schonend und mit kompakten Wicklungsköpfen herstellbar sind.

Zum Lösen dieser Aufgabe schafft die Erfindung ein Biegeverfahren mit den Schritten des Anspruchs 1. Ein ein solches Biegeverfahren verwendendes Herstellverfahren, eine Biegevorrichtung zum Durchführen des Biegeverfahrens sowie eine Herstellvorrichtung zum Durchführen des Herstellverfahrens sowie ein Computerprogrammprodukt hierfür sind die Gegenstände der Nebenansprüche.

Vorteilhafte Ausgestaltungen sind Gegenstand der Unteransprüche.

Die Erfindung schafft gemäß einem ersten Aspekt davon ein Biegeverfahren zum Biegen von Drahtabschnitten für eine Wellenwicklungsmatte zum Bilden einer Spulenwicklung eines Bauteils einer elektrischen Maschine, umfassend:
a) Bereitstellen einer Drahtgruppe aus nebeneinander beabstandet parallel angeordneten Drähten;
b) Biegen einer Mäanderform an wenigstens einem ersten Draht der Drahtgruppe so, dass der wenigstens eine erste Draht wenigstens einen zweiten Draht der Drahtgruppe kreuzt, und
c) Biegen der Mäanderform an dem wenigstens einen zweiten Draht der Drahtgruppe so, dass der wenigstens eine zweite Draht den wenigstens einen ersten Draht kreuzt.

Es ist erfindungsgemäß vorgesehen, dass Schritt b) und/oder Schritt c) den Schritt enthalten: Aufeinander zu Bewegen eines ersten und eines zweiten Halters zum Halten eines Drahtabschnittes in einer Bewegungsrichtung, die im Wesentlichen parallel zu der Längsrichtung der Drahtgruppe gerichtet ist, und gleichzeitiges Verschwenken des ersten Halters um eine erste Schwenkachse und des wenigstens einen zweiten Halters um eine zweite Schwenkachse, wobei die Schwenkachsen im Wesentlichen senkrecht zu der Erstreckung der Drahtgruppe gerichtet sind.

Es ist bevorzugt, dass Schritt b) und/oder Schritt c) den Schritt enthalten:
Flachbiegen der Mäanderform im Wesentlichen in einer Ebene.

Es ist bevorzugt, dass Schritt b) und/oder Schritt c) den Schritt enthalten:
Umbiegen einer ersten Halbwelle um eine Biegeform und Umbiegen einer zweiten Halbwelle um eine Biegeform.

Es ist bevorzugt, dass Schritt b) und/oder Schritt c) den Schritt enthalten:
Biegen der Mäanderform in einer sich im Wesentlichen parallel zu der Erstreckung der bereitgestellten Drahtgruppe erstreckenden Ebene.

Es ist bevorzugt, dass Schritt b) und/oder Schritt c) den Schritt enthalten:
Biegen zumindest des jeweils am nächsten an einer ersten Längsseite der Drahtgruppe befindlichen Drahtes zu der entgegen gerichteten zweiten Längsseite der Drahtgruppe hin über die verbleibenden Drähte der Drahtgruppe hinweg.

Es ist bevorzugt, dass Schritt b) und/oder Schritt c) den Schritt enthalten:
Biegen der Mäanderform an dem wenigstens einen ersten Draht der Drahtgruppe unter Übersetzen des wenigstens einen ersten Drahtes über den wenigstens einen zweiten Draht der Drahtgruppe und Biegen der Mäanderform an dem wenigstens einen zweiten Draht der Drahtgruppe unter Übersetzen des wenigstens einen zweiten Drahts über den wenigstens einen ersten Draht.

Es ist bevorzugt, dass Schritt b) und/oder Schritt c) den Schritt enthalten:
Biegen der Mäanderform an dem wenigstens einen ersten Draht der Drahtgruppe unter Unterführen des wenigstens einen ersten Drahtes unter wenigstens einen zweiten Draht der Drahtgruppe und Biegen der Mäanderform an dem wenigstens einen zweiten Draht der Drahtgruppe unter Unterführen des wenigstens einen zweiten Drahts unter den wenigstens einen ersten Draht.

Es ist bevorzugt, dass Schritt b) und/oder Schritt c) den Schritt enthalten:
Ausbilden einer Kröpfung in einem Drahtabschnitt des ersten und/oder zweiten Drahts, an dem eine Umbiegung der Mäanderform gebildet oder zu bilden ist.

Es ist bevorzugt, dass Schritt b) und/oder Schritt c) den Schritt enthalten:
Biegen der Mäanderform des ersten und des zweiten Drahtes mit gleichem Mäanderweitenmaß.

Es ist bevorzugt, dass Schritt b) und/oder Schritt c) den Schritt enthalten:
Biegen der Mäanderform des ersten und des zweiten Drahtes mit unterschiedlichem Mäanderweitenmaß.

Es ist bevorzugt, dass Schritt b) und/oder Schritt c) den Schritt enthalten:
Übereinanderbiegen des jeweils in Taktrichtung vorne liegenden wenigstens einen Drahtes der Drahtgruppe über die anderen Drähte der Drahtgruppe, um so die Drähte zu verweben.

Es ist bevorzugt, dass Schritt b) und/oder Schritt c) den Schritt enthalten:
Relativbewegen des jeweils wenigstens einen zu biegenden Drahts relativ zu den anderen Drähten in einer Richtung quer zur Längserstreckung der Drähte.

Es ist bevorzugt, dass Schritt b) und/oder Schritt c) den Schritt enthalten:
Relativbewegen des jeweils wenigstens einen zu biegenden Drahts relativ zu den anderen Drähten in einer Richtung quer zur Längserstreckung der Drähte mittels eines insgesamt drehbaren Drehmagazins mit darin drehbar gelagerten Drahtunterstützungen, in denen die Drähte gehalten sind.

Es ist bevorzugt, dass Schritt b) und/oder Schritt c) den Schritt enthalten:
Relativbewegen des jeweils wenigstens einen zu biegenden Drahts relativ zu den anderen Drähten in einer Richtung quer zur Längserstreckung der Drähte mittels Erfassen des zu biegenden Drahts mit einem sich in eine Querrichtung bewegenden Greifer und gemeinsames Bewegen der verbleibenden Drähte in die entgegengesetzte Querrichtung.

Es ist bevorzugt, dass Schritt b) und/oder Schritt c) den Schritt enthalten:
Biegen der Mäanderform an relativ zueinander bewegbaren und verschwenkbaren Klemm- und Formelementen.

Es ist bevorzugt, dass die Schritte b) und c) nacheinander wiederholt werden, bis an einem Längenabschnitt der Drahtgruppe Mäanderformen an allen Drähten der Drahtgruppe gebildet sind.

Gemäß einem weiteren Aspekt schafft die Erfindung ein Herstellverfahren zum Herstellen einer Wellenwicklungsmatte zum Bilden einer Spulenwicklung eines Bauteils einer elektrischen Maschine, umfassend:
Durchführen des Biegeverfahrens nach einer der voranstehenden Ausgestaltungen an einem Längenabschnitt der Drahtgruppe und Wiederholen des Biegeverfahrens an weiteren Längenabschnitten, bis die Wellenwicklungsmatte in der gewünschten Länge gebildet ist.

Vorzugsweise umfasst das Herstellverfahren den Schritt:
Abisolieren von Drahtbereichen der Drähte.

Vorzugsweise umfasst das Herstellverfahren den Schritt:
Ablängen der Drähte vor dem Biegeverfahren auf eine vorbestimmte Länge.

Vorzugsweise umfasst das Herstellverfahren den Schritt:
Lagern der bereitzustellenden Drähte und/oder der bereitzustellenden Drahtgruppe in einem Puffermagazin.

Vorzugsweise umfasst das Herstellverfahren den Schritt:
Biegen von Sprüngen in vorbestimmte Abschnitte wenigstens einer oder aller der Drähte.

Vorzugsweise umfasst das Herstellverfahren den Schritt:
Biegen von Sprüngen an unterschiedlichen Abschnitten und/oder unterschiedlichen Drähten der Drahtgruppe mit unterschiedlichen Sprungrichtungen und/oder unterschiedlichen Versatzhöhen.

Vorzugsweise umfasst das Herstellverfahren den Schritt:
taktweises Durchführen des Biegeverfahrens.

Vorzugsweise umfasst das Herstellverfahren den Schritt:
Abführen des bereits fertig gestellten Bereichs der Wellenwicklungsmatte auf einer Wellenwicklungsmattenaufnahme.

Vorzugsweise umfasst das Herstellverfahren den Schritt:
Abführen des bereits fertig gestellten Bereichs der Wellenwicklungsmatte quer zu der Längserstreckung der zugeführten Drahtgruppe.

Vorzugsweise umfasst das Herstellverfahren den Schritt:
Abführen des bereits fertig gestellten Bereichs der Wellenwicklungsmatte auf einem Rechen.

Vorzugsweise umfasst das Herstellverfahren den Schritt:
Abführen des bereits fertig gestellten Bereichs der Wellenwicklungsmatte durch synchrones Austakten der Wellenwicklungsmatte.

Mit einem Herstellverfahren nach einer der voranstehenden Ausgestaltungen ist eine verwebte flachgewickelte Wellenwicklungsmatte erhältlich.

Vorzugsweise ist eine Wellenwicklungsmatte mit geradlinigen Drahtabschnitten erhätlich, die durch Wicklungsköpfe miteinander verbunden sind, wobei eine quer zu der Längserstreckung und quer zu den geradlinigen Drahtabschnitten gemessene Höhe der Wellenwicklungsmatte im Bereich der Wicklungsköpfe gleich oder kleiner als im Bereich der geradlinigen Drahtabschnitte ist.

Gemäß einem weiteren Aspekt schafft die Erfindung eine Biegevorrichtung zur Verwendung bei der Herstellung einer Wellenwicklungsmatte zum Bilden einer Spulenwicklung eines Bauteils einer elektrischen Maschine, umfassend:
eine Drahtgruppenzustelleinrichtung zum Zustellen einer Drahtgruppe aus nebeneinander beabstandet parallel angeordneten Drähten,
eine Flachbiegeeinrichtung zum derartigen Biegen eines Biegeabschnitts wenigstens eines Drahts der Drahtgruppe in eine Mäanderform, dass der Drahtabschnitt die verbleibenden Drähte der Drahtgruppe kreuzt, und
eine Querbewegungseinrichtung zum relativen Bewegen des wenigstens einen zu biegenden Drahts und der verbleibenden Drähte in einer Richtung quer zu der Längserstreckung der durch die Drahtgruppenzustelleinrichtung zugestellten Drähte.

Es ist erfindungsgemäß weiter vorgesehen, dass die Flachbiegeeinrichtung mehrere Halter zum Halten mehrerer geradliniger Drahtabschnitte des Biegeabschnitts aufweist, die in einer Bewegungsrichtung aufeinander zu und voneinander weg bewegbar sind und relativ zueinander um im Wesentlichen quer zu der Bewegungsrichtung und im Wesentlichen parallel zueinander verlaufende Schwenkachsen schwenkbar sind.

Es ist bevorzugt, dass die Flachbiegeeinrichtung mehrere Formelemente zum Formen von gebogenen Bereichen des Biegeabschnitts aufweist.

Es ist bevorzugt, dass die Flachbiegeeinrichtung relativ zu der Drahtgruppenzustelleinrichtung in einer quer zu der Erstreckung der zugestellten Drahtgruppe gerichteten Höhenrichtung bewegbar ist.

Es ist bevorzugt, dass die Flachbiegeeinrichtung ausgebildet ist zum Flachbiegen der Mäanderform im Wesentlichen in einer Ebene.

Es ist bevorzugt, dass die Flachbiegeeinrichtung ausgebildet ist zum Umbiegen einer ersten Halbwelle um eine Biegeform und Umbiegen einer zweiten Halbwelle um eine Biegeform.

Es ist bevorzugt, dass die Flachbiegeeinrichtung ausgebildet ist zum Biegen der Mäanderform so, dass sich diese im Wesentlichen parallel zu der Erstreckung der bereitgestellten Drahtgruppe erstreckt.

Es ist bevorzugt, dass die Flachbiegeeinrichtung ausgebildet ist zum Biegen zumindest des jeweils am weitesten an einer ersten Längsseite der Drahtgruppe befindlichen Drahtes zu der entgegen gerichteten zweiten Längsseite der Drahtgruppe hin über die verbleibenden Drähte der Drahtgruppe hinweg.

Es ist bevorzugt, dass die Flachbiegeeinrichtung ausgebildet ist zum Biegen der Mäanderform an dem wenigstens einen ersten Draht der Drahtgruppe unter Übersetzen des wenigstens einen ersten Drahtes über den wenigstens einen zweiten Draht der Drahtgruppe und zum Biegen der Mäanderform an dem wenigstens einen zweiten Draht der Drahtgruppe unter Übersetzen des wenigstens einen zweiten Drahts über den wenigstens einen ersten Draht.

Es ist bevorzugt, dass die Flachbiegeeinrichtung ausgebildet ist zum Biegen der Mäanderform an dem wenigstens einen ersten Draht der Drahtgruppe unter Unterführen des wenigstens einen ersten Drahtes unter wenigstens einen zweiten Draht der Drahtgruppe und zum Biegen der Mäanderform an dem wenigstens einen zweiten Draht der Drahtgruppe unter Unterführen des wenigstens einen zweiten Drahts unter den wenigstens einen ersten Draht.

Es ist bevorzugt, dass die Flachbiegeeinrichtung ausgebildet ist zum Biegen der Mäanderform des ersten und des zweiten Drahtes mit gleicher oder unterschiedlicher Mäanderweitenform.

Es ist bevorzugt, dass die Flachbiegeeinrichtung ausgebildet ist zum Übereinanderbiegen des jeweils in Taktrichtung vorne liegenden wenigstens einen Drahtes der Drahtgruppe über die anderen Drähte der Drahtgruppe, um so die Drähte zu verweben.

Es ist bevorzugt, dass die Flachbiegeeinrichtung dazu ausgebildet ist, das Flachbiegen nacheinander an allen Drähten der Drahtgruppe zu wiederholen, bis an einem Längenabschnitt der Drahtgruppe Mäanderformen an allen Drähten der Drahtgruppe gebildet sind.

Vorzugsweise umfasst die Biegevorrichtung eine Sprungbiegungseinrichtung zum Ausbilden wenigstens einer Kröpfung in dem Drahtabschnitt.

Es ist bevorzugt, dass die Querbewegungseinrichtung ein insgesamt drehbares Drehmagazin mit darin drehbar gelagerten Drahtunterstützungen zum Halten der Drähte der Drahtgruppe aufweist.

Es ist bevorzugt, dass die Querbewegungseinrichtung einen in einer Querbewegungsrichtung bewegbaren Greifer zum Erfassen des zu biegenden Drahts aufweist und ein in die entgegengesetzte Querrichtung bewegbares Stützelement zum gemeinsamen Bewegen der verbleibenden Drähte in die entgegengesetzte Querrichtung aufweist.

Gemäß einem weiteren Aspekt schafft die Erfindung eine Herstellvorrichtung zum Herstellen einer Wellenwicklungsmatte zum Bilden einer Spulenwicklung eines Bauteils einer elektrischen Maschine, umfassend
eine Biegevorrichtung nach einer der voranstehenden Ausgestaltungen und eine Steuerung, die dazu ausgebildet ist, die Biegevorrichtung zum Durchführen des Herstellverfahrens nach einer der voranstehenden Ausgestaltungen anzusteuern.

Vorzugsweise umfasst die Herstellvorrichtung eine Isolierungsentfernungseinrichtung zum Abisolieren von Drahtbereichen der Drähte.

Vorzugsweise umfasst die Herstellvorrichtung eine Drahtschneideeinrichtung zum Ablängen der Drähte vor dem Biegen.

Vorzugsweise umfasst die Herstellvorrichtung ein Puffermagazin zum Lagern der bereitzustellenden Drähte.

Vorzugsweise umfasst die Herstellvorrichtung eine Wellenwicklungsmattenaufnahme zum Aufnehmen und Abführen des bereits fertig gestellten Bereichs der Wellenwicklungsmatte. Insbesondere weist die Wellenwicklungsmattenaufnahme einen Rechen mit einer Reihe von kammartigen Vorsprüngen auf, die zum Eingreifen zwischen die einzelnen Drähte der Wellenwicklungsmatte ausgebildet sind. Vorzugsweise ist der Rechen in einer Richtung quer zu der Zuführungsrichtung der Drahtgruppe bewegbar.

Gemäß einem weiteren Aspekt schafft die Erfindung ein Computerprogrammprodukt, enthaltend maschinenlesbare Steueranweisungen, die, wenn in eine Steuerung einer Herstellvorrichtung nach einer der voranstehenden Ausgestaltungen geladen, die Herstellvorrichtung veranlassen, das Verfahren nach einer der voranstehenden Ausgestaltungen durchzuführen.

Die Erfindung betrifft eine flachgewickelte verwebte Matte aus Drähten zum Bilden einer Spulenwicklung eines Bauteils einer elektrischen Maschine. Insbesondere werden Ausgestaltungen zum Flachwickeln einer verwebten Matte oder zum Verweben einer flachgewickelten Matte beschrieben.

Besondere Vorteile bevorzugter Ausgestaltungen der Erfindung gegenüber dem bekannten Stand der Technik werden im Folgenden kurz erläutert.

Besondere Ausgestaltungen der Erfindung betreffen ein Wickelverfahren zum Herstellen einer Grundform einer Spulenwicklung, insbesondere einer Wellenwicklung.

Bei bevorzugten Ausgestaltungen werden Drähte mit rechteckigem Querschnitt möglichst schonend vorzugsweise ganz ohne oder mit möglichst geringer Torsion in eine gewünschte Form gebracht.

Bei bevorzugten Ausgestaltungen lassen sich Kopfformen von Wicklungsköpfen exakt entsprechend gewünschter Vorgaben formen.

Bei bevorzugten Ausgestaltungen werden geradlinige Drahtabschnitte mittels Führungen, Haltern, Klemmen oder dergleichen geführt und/oder eingespannt. Dadurch werden diese nicht frei im Raum geformt, das Risiko unerwünschter Verformungen der geradlinigen Drahtabschnitte wird vermieden.

Bei bevorzugten Ausgestaltungen werden zu formende Drähte mittels Führungen, Haltern, Klemmen oder dergleichen geführt und eingespannt und an Biegeformen geformt. Vorzugsweise werden die geradlinigen Drahtabschnitte fest eingespannt. Vorteilhaft werden Relativbewegungen zwischen den Drähten und an den Drähten angreifenden Elementen der Biegevorrichtung vermieden. Dadurch wird das Risiko von Beschädigungen von Drahtisolierungen oder der Drähte durch Relativbewegung an formenden oder klemmenden Bereichen verringert oder vermieden.

Bei bevorzugten Ausgestaltungen werden mehrere Drähte eines Drahtpakets geformt. Gegenüber einer Einzelformung von Drähten ergibt sich eine Verkürzung von Taktzeiten. Die Notwendigkeit eines Zusammenfügens der geformten Drähte entfällt, so dass ein Prozessschritt entfällt.

Bei bevorzugten Ausgestaltungen wird eine verwebte Matte hergestellt.

Bei bevorzugten Ausgestaltungen werden die Drehbewegungen und Linearbewegungen von Formelementen synchronisiert und aufeinander abgestimmt.

Bei bevorzugten Ausgestaltungen wird die Biegekontur der einzelnen Drähte durch Formelemente definiert und somit vorbestimmt. Vorzugsweise sind die Formelemente hierzu miteinander wirkgekoppelt und miteinander durch Getriebe, Aktoren, oder dergleichen verbunden.

Bei bevorzugten Ausgestaltungen werden die Drähte mit einer vorbestimmten Form gebogen. Vorzugsweise werden Formelemente linear und drehbeweglich angetrieben. Vorzugsweise sind die Formelemente aneinander angelenkte oder sonst miteinander in Wirkverbindung stehende Glieder einer Biegekette

Bei bevorzugten Ausgestaltungen wird eine vorbestimmte Kontur in zumindest einige oder alle Wicklungsköpfe geformt. Hierzu sind z.B. Biegeformen, an denen sich die zu biegenden Bereiche bei der Formung der Mäanderform anlegen, vorgesehen. Weiter kann ein Stempel oder eine sonstige Formeinheit zum Einbringen einer Sprungbiegung oder einer Kröpfung an dem Wicklungskopf vorgesehen sein. Besonders bevorzugt erfolgt wird eine Sprungbiegung durch Relativbewegung zweier Greifer, die Drahtabschnitte greifen, zwischen denen die Sprungbiegung eingebracht werden soll. Somit lässt sich auch die Sprungbiegung möglichst schonend für Draht und Drahtisolierung einbringen.

Vorzugsweise erfolgt bei den einzelnen Biegevorgängen lediglich eine seitliche Belastung und keine oder eine möglichst geringe Zugbelastung auf die einzelnen Drähte.

Vorzugsweise erfolgt das Biegen der Mäanderform derart, dass ein Überbiegen über die gewünschte Mäanderform hinaus erfolgt. Durch ein Überbiegen kann einer Tendenz zur Rückbiegung begegnet werden und somit kann die Parallelität der Drähte in dem Drahtpaket und diejenige der geradlinigen Drahtabschnitte in der Wellenwicklungsmatte verbessert werden.

Bei bevorzugten Ausgestaltungen erfolgt ein Einprägen der Kopfform, insbesondere das Vorsehen einer Sprungbiegung an der Kopfform der Wicklungsköpfe im Verlauf der Biegung der Mäanderform. Dadurch lassen sich Prozessschritte und Arbeitsstationen einsparen.

Bei bevorzugten Ausgestaltungen ist die Wicklungskopfhöhe gleich oder kleiner oder allenfalls nur sehr geringfügig größer als die Wicklungshöhe. Damit lässt sich mit bevorzugten Ausgestaltungen eine Wellenwicklungsmatte herstellen, welche bei Einfügen in einen Stator, einen Rotor oder ein sonstiges Bauteil mit zentraler Achse keinen radialen Aufbau des Wicklungskopfes hat. Dies wird insbesondere durch eine verwebte Flachwicklung erreicht.

Eine Spulenwicklungsmatte, die keinen radialen Aufbau der Wicklungsköpfe hat, hat den Vorteil, den Bauraum zu verringern und die Zugänglichkeit für weitere Funktionselemente, z.B. die Zugänglichkeit für Kühlkanäle oder dergleichen, zu erhöhen.

Bei bevorzugten Ausgestaltungen werden sowohl die Vorteile einer klassischen Flachwicklung und als auch die einer Schwertwicklung erreicht. Vorteilhaft wird eine flachgewickelte verwebte Wicklungsmatte erreicht.

Bei bevorzugten Ausgestaltungen ist ein Leitertausch in jedem Wicklungskopf möglich. Außerdem ist ein Lagentausch in jedem Wicklungskopf möglich.

Bevorzugte Ausgestaltungen betreffen ein Biegeverfahren und ein Herstellverfahren, mit welchen eine flachgewickelte verwebte Wellenwicklungsmatte erhältlich sind. Bei bevorzugten Ausgestaltungen werden die in Wellenform flachzuwickelnden Drähte beim Biegen direkt ineinander verwebt.

Bei bevorzugten Ausgestaltungen werden die Drähte einer Einzelmatte zunächst parallel geführt. Anschließend wird mindestens ein Draht in eine Biegekette aufgenommen und in eine Mäanderform gebogen. Dabei kreuzt er die restlichen Drähte. Diese Bewegung wird vorzugsweise solange ausgeführt, bis die gesamte Matte hergestellt ist. Vorzugsweise werden die Drähte durch das stetige Kreuzen der Drähte ineinander verflochten.

Bei bevorzugten Ausgestaltungen werden die Einzeldrähte gebogen und zeitgleich zu einer Matte verwebt. Vorteilhaft kann eine Matte hergestellt werden, welche keinen radialen Wicklungskopfaufbau zulässt. Vorteilhaft werden sowohl Vorteile einer Flachwicklung als auch einer Schwertwicklung erreicht.

Ausführungsbeispiele der Erfindung werden im Folgenden anhand der beigefügten Zeichnungen näher erläutert. Darin zeigt:
- Fig. 1: eine vereinfachte schematische perspektivische Darstellung eines Bereichs eines Bauteils einer elektrischen Maschine mit einer ersten Spulenwicklung zum Zwecke der Begriffsklärung;
- Fig. 2: eine vereinfachte schematische perspektivische Darstellung eines Bereichs eines Bauteils einer elektrischen Maschine mit einer zweiten Spulenwicklung zum Zwecke der Begriffsklärung;
- Fig. 3: eine teils perspektivische, teils geschnittene Darstellung eines Bereichs eines Bauteils einer elektrischen Maschine mit einer aus einer Wellenwicklungsmatte gemäß einem Ausführungsbeispiel der Erfindung gebildeten Spulenwicklung;
- Fig. 4: eine Draufsicht auf einen Teilbereich des Schnitts in Fig. 3;
- Fig. 5: eine teils perspektivische, teils geschnittene Darstellung eines Bereichs eines Bauteils einer elektrischen Maschine mit einer aus einer durch Schwertwicklung gebildeten Wickelmatte gemäß einem Vergleichsbeispiel gebildeten Spulenwicklung;
- Fig. 6: eine Draufsicht auf einen Teilbereich des Schnitts in Fig. 5;
- Fig. 7: eine teils perspektivische, teils geschnittene Darstellung eines Bereichs eines Bauteils einer elektrischen Maschine mit einer aus einer durch Flachwickeln gebildeten Wellenwickelmatte gemäß einem Vergleichsbeispiel gebildeten Spulenwicklung;
- Fig. 8: eine Draufsicht auf einen Teilbereich des Schnitts in Fig. 7;
- Fig. 9: eine schematische Übersichtsdarstellung von Schritten eines Biegeverfahrens zum Biegen von Drahtabschnitten für eine Wellenwicklungsmatte gemäß einem Ausführungsbeispiel der Erfindung;
- Fig. 10: eine schematische Skizze eines zu der Wellenwicklungsmatte zu biegenden Drahtpakets während des Verfahrens von Fig. 9, wobei ein Teil der Wellenwicklungsmatte bereits fertig gebogen ist;
- Fig. 11: eine perspektivische Darstellung eines Wicklungskopfes mit einer Sprungbiegung, die vor oder während eines Biegevorgangs im Biegeverfahren nach Fig. 9 eingebracht wird;
- Fig. 12: eine perspektivische Darstellung eines erfindungsgemäßen Ausführungsbeispiels der Wellenwicklungsmatte, die unter Einsatz des Biegeverfahrens nach den Fig. 9 bis 11 herstellbar ist;
- Fig. 13: ein Ablaufdiagramm eines Herstellverfahrens der Wellenwicklungsmatte gemäß Ausführungsbeispielen der Erfindung;
- Fig. 14: eine schematische Schnittdarstellung durch ein erstes Ausführungsbeispiel einer Querbewegungseinrichtung zum Querbewegen von zuzuführenden Drähten im Verlauf des Biegeverfahrens von Fig. 9, 10 und 13;
- Fig. 15: eine schematische perspektivische Darstellung eines zweiten Ausführungsbeispiels einer Querbewegungseinrichtung zum Querbewegen von zuzuführenden Drähten im Verlauf des Biegeverfahrens von Fig. 9, 10 und 13;
- Fig. 16: ein schematisches Blockdiagramm einer Drahtgruppenzustelleinrichtung zum Zustellen einer Drahtgruppe aus nebeneinander beabstandet parallel angeordneten Drähten, um an der Drahtgruppe das Biegeverfahren nach einer der Fig. 9, 10 und 13 durchzuführen; und
- Fig. 17: eine perspektivische Übersichtsdarstellung einer Herstellvorrichtung gemäß einem Ausführungsbeispiel der Erfindung zum Herstellen einer Wellenwicklungsmatte gemäß Fig. 12.

Im Folgenden werden Ausführungsbeispiele von Verfahren und Vorrichtungen zum Herstellen von aus Wellenwicklungsdrähten 32 zusammengefügten Wellenwicklungsmatten 30, 30a zum Herstellen einer Spulenwicklung 20 einer elektrischen Maschine anhand der beigefügten Figuren beschrieben.

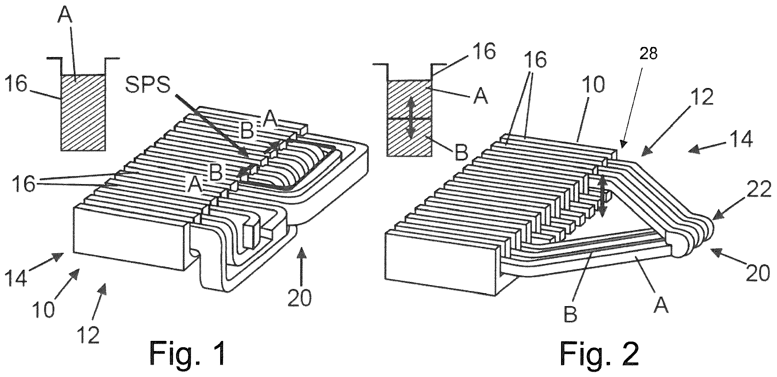

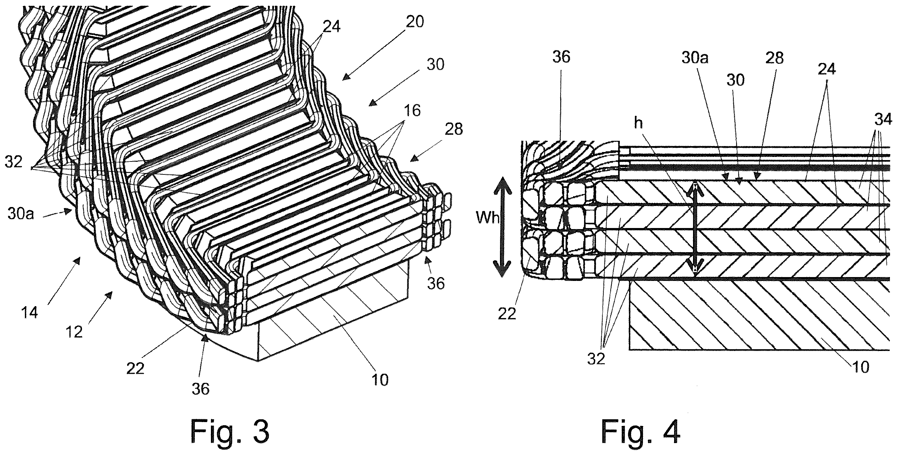

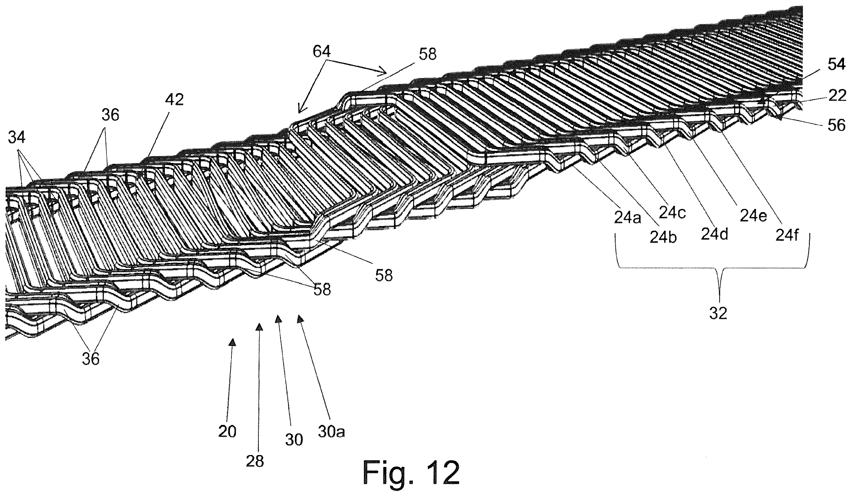

Ein erfindungsgemäßes Ausführungsbeispiel für eine solche Spulenwicklung 20 ist in den Figuren 3 und 4 im eingebauten Zustand und in Fig. 12 gesondert gezeigt. Vergleichsbeispiele für eine solche Spulenwicklung 20 zur Begriffsklärung und zum Vergleich sind in den Fig. 1 und 2 sowie 5 bis 8 wiedergegeben. Es wird daher zunächst auf die Fig. 1 bis 8 und 12 Bezug genommen.

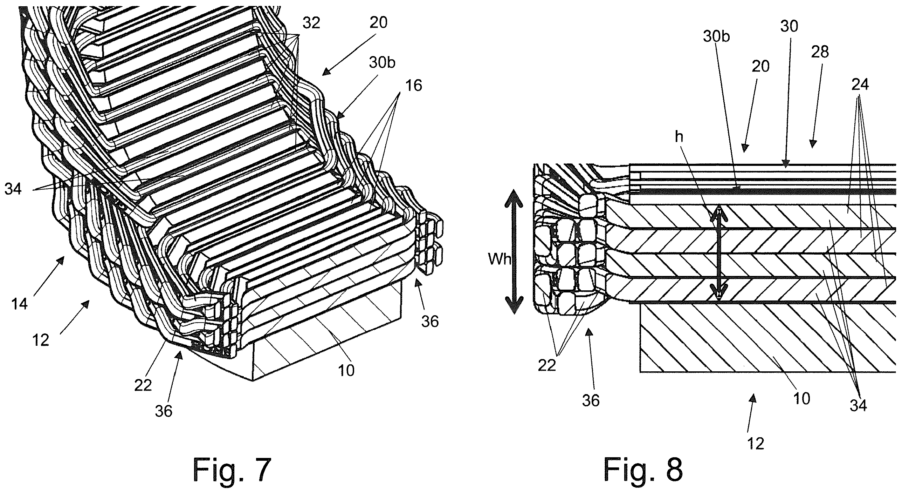

Die Spulenwicklung 20 ist durch wenigstens eine Spulenwicklungsmatte 28 gebildet. Bei dem Ausführungsbeispiel der Erfindung gemäß Fig. 3, 4 und 12 sowie bei dem Vergleichsbeispiel gemäß Fig. 7 und 8 ist die Spulenwicklungsmatte 28 als Wellenwicklungsmatte 30, 30a, 30b ausgebildet.

Unter einer Spulenwicklungsmatte 28 wird ein aus mehreren gebogenen Drähten 24 gebildetes mattenförmiges Leiterbündel verstanden. Unter einer Wellenwicklungsmatte 30 wird ein aus mehreren Wellenwicklungsdrähten 32 (Leitern) gebildetes mattenförmiges Leiterbündel verstanden. Wellenwicklungsdrähte 32 sind wellenartig gebogene Drähte 24, wobei die Herstellung der Biegung in einer Ebene, durch Umbiegung aufeinanderfolgender Drahtabschnitte in entgegengesetzte Biegungsrichtungen erfolgen kann. Eine derartige als Flachwickeln bezeichnete Herstellart führt insbesondere bei Profildrähten, die eine von einer runden Form abweichende Querschnittsprofilform, beispielsweise Rechteckprofil aufweisen, zu einer schonenden Biegung und zu größerer Prozesssicherheit.

Die Spulenwicklungsmatte 28 und damit auch die Wellenwicklungsmatte 30, 30a, 30b umfasst insbesondere mehrere sich in einer Längsrichtung erstreckende wellenförmig gebogene Wellenwicklungsdrähte 32, die in Längsrichtung beabstandete und sich in einer quer zur Längsrichtung verlaufenden Querrichtung erstreckende geradlinige Drahtabschnitte 34 und dachförmige Wicklungsköpfe 36 dazwischen derart aufweisen, dass benachbarte geradlinige Drahtabschnitte 34 durch einen dachförmig gebogenen Wicklungskopf 36 miteinander verbunden sind.

Die geradlinigen Drahtabschnitte 34 der Spulenwicklungsmatte 28 dienen insbesondere wie in den Fig. 1 und 2 gezeigt dazu, in Nuten 16 eines Gehäuses 10 eines Bauteils 12 einer elektrischen Maschine, wie insbesondere einem Stator 14 eines Elektromotors, eingefügt zu werden. Die Wicklungsköpfe 36 bilden jeweils einen Umschlag und stehen außen an den axial gerichteten Gehäuseenden vor und verbinden den Drahtabschnitt 34 einer Nut 16 mit einem Drahtabschnitt 34 in einer anderen Nut 16. Insgesamt lässt sich so durch wenigstens eine oder auch mehrere Spulenwicklungsmatten 28 und insbesondere Wellenwicklungsmatten 30 die Spulenwicklung 20 des Bauteils 12 der elektrischen Maschine bilden. Beispielsweise soll eine dreiphasige Spulenwicklung 20 hergestellt werden.

Im Folgenden werden zunächst einige Begriffe, die bei der folgenden Beschreibung von Ausführungsbeispielen der Erfindung verwendet werden, anhand der Darstellungen in Fig. 1 und 2 näher erläutert. Die Fig. 1 und 2 zeigen eine vereinfachte Darstellung eines Teilsegments eines Gehäuses 10 eines als Beispiel für ein Bauteil 12 dienenden Stators 14 mit Nuten 16 und einer aus Leitern A, B gebildeten Spulenwicklung 20, wobei in Fig. 1 eine Einschichtwicklung dargestellt ist, bei der die Leiter A und B in einer Ebene bleiben und in Fig. 2 eine Zweischichtwicklung gezeigt ist, bei der die Leiter A und B die Ebene wechseln.

Spulenschritt/Spulenweite: Der "Spulenschritt" SPS gibt an, um wie viel Nuten 16 ein einzelner Leiter A, B pro Umschlag weiterspringt. Den durchschnittlichen Spulenschritt SPS der Spulenwicklung 20 nennt man "Spulenweite". Der Spulenschritt und die Spulenweite können sich unterscheiden, beispielsweise wenn zwei Einzelleiter der gleichen Phase parallel laufen. In Fig. 1 erkennt man, dass der Leiter B einen Spulenschritt SPS von fünf hat. Der äußere Leiter A springt um sieben Nuten weiter. Dadurch erhält man eine Spulenweite von sechs.

Shiftmaß: Das "Shiftmaß" ist die Maßangabe der Spulenweite. Dieses ist durchmesserabhängig, da sich der Umfangsabstand zwischen den Nuten 16 des Stators 14 vergrößert, wenn der Durchmesser größer wird. Hat eine Spulenwicklungsmatte 28 mehrere Umläufe im Stator 14, so hat sie mehrere Shiftmaße aber eine konstante Spulenweite.

Zonenbreite: Die "Zonenbreite" gibt an, ab welcher Nutenzahl sich ein Wickelschema wiederholt. Ist der Spulenschritt konstant, dann entspricht die "Zonenbreite" der Spulenweite. Wechselt der Spulenschritt SPS bei einer Spulenweite von sechs jedes Mal, wiederholt sich das Schema nach dem zweiten Umschlag, damit erhält man eine Zonenbreite von zwölf.

Leitertausch: Hat ein Wickelschema diese Unterschiede im Spulenschritt, spricht man von einer Wicklung mit "Leitertausch". Betrachtet man die Reihenfolge der Leiter A, B in Fig. 1 in Umfangsrichtung, dann erkennt man, dass immer zwei Leiter vertauscht werden (AB→BA).

Lagentausch: Wechseln, wie in Fig. 2, zwei Leiter A, B die Ebenen in der Nut 16 oder in einer Spulenwicklungsmatte, dann spricht man von einem "Lagentausch". An der Stelle, an der die Leiter A, B die Ebene wechseln, haben diese einen Sprung 22. Eine Spulenwicklungsmatte ohne Lagentausch wird auch als "einschichtige Spulenwicklungsmatte" bezeichnet, eine Spulenwicklungsmatte mit Lagentausch als "zweischichtige Spulenwicklungsmatte". Durch den Lagentausch erreicht man zudem einen Ausgleich der Potentialunterschiede in den Leitern, der durch einen unterschiedlichen Abstand der beiden Lagen zu einem anderen Bauteil der elektrischen Maschine, wie z.B. dem Rotor, entstehen würde.

Die Fig. 3 und 4 zeigen Darstellungen eines Teilsegments des Gehäuses 10 des als Beispiel für das Bauteil 12 dienenden Stators 14 mit Nuten 16 und einer aus einer Wellenwicklungsmatte 30, 30a gemäß einem Ausführungsbeispiel der Erfindung gebildeten Spulenwicklung 20. Die Wellenwicklungsmatte 30 gemäß dem Ausführungsbeispiel ist eine flachgewickelte verwebte Wellenwicklungsmatte 30a, bei der die einzelnen Drähte 24 oder Untergruppen von Drähten 24 beim Flachwickeln miteinander verwebt worden sind, wie dies im Einzelnen weiter unten näher dargestellt wird.

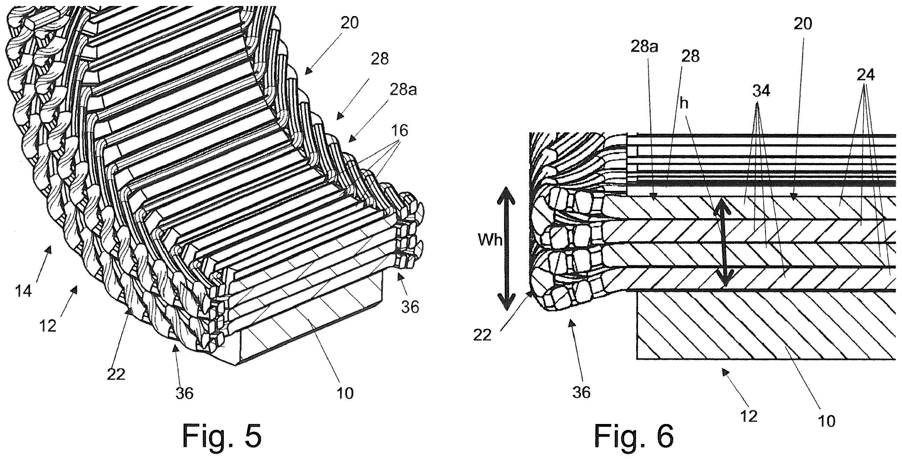

Die Fig. 5 und 6 zeigen Darstellungen des Teilsegments des Gehäuses 10 des als Beispiel für das Bauteil 12 dienenden Stators 14 mit Nuten 16 und einer aus einer Wickelmatte 28a gemäß einem ersten Vergleichsbeispiel gebildeten Spulenwicklung 20. Die Wickelmatte 28a ist durch Schwertwicklung hergestellt, wie dies in der Literaturstelle [8] näher beschrieben und gezeigt ist. Die Fig. 7 und 8 zeigen Darstellungen des Teilsegments des Gehäuses 10 des als Beispiel für das Bauteil 12 dienenden Stators 14 mit Nuten 16 und einer aus einer Wellenwicklungsmatte 30, 30b gemäß einem zweiten Vergleichsbeispiel gebildeten Spulenwicklung 20. Die Wellenwicklungsmatte 30b ist durch einzelnes Flachwickeln von Wellenwicklungsdrähten 32 und Zusammenfügen der so einzeln gebogenen Wellenwicklungsdrähte 32 hergestellt, wie dies z.B. in der Literaturstelle [7] beschrieben und gezeigt ist.

Wie man durch einen Vergleich der Fig. 3 bis 8 erkennen kann, baut der Wicklungskopf 36 im Stator 14 je nach Herstellart in unterschiedlichem Maße radial auf. In den Fig. 4, 6 und 8 sind jeweils die Höhe h der Spulenwicklungsmatte 28 im Bereich der geradlinigen Drahtabschnitte 34 (im Folgenden Wicklungshöhe h genannt), also im Einsatz in einer entsprechenden Nut 16, und die maximale Höhe Wh der Spulenwicklungsmatte 28 im Bereich der Wicklungsköpfe 36 (im Folgenden Wicklungskopfhöhe Wh genannt) dargestellt. Bei der Schwertwicklung gemäß den Fig. 5 und 6 und bei der Flachwicklung gemäß den Fig. 7 und 8 ist die Wicklungskopfhöhe Wh deutlich größer als die Wicklungshöhe h, d.h. die Wicklungsköpfe 36 erstrecken sich bei den Spulenwicklungsmatten 28 gemäß den Vergleichsbeispielen mehr in die radiale Richtung als die geradlinigen Drahtabschnitte 34.

Um den Bauraum zu verringern und die Zugänglichkeit für beispielsweise Kühlkanäle zu erhöhen, wird gemäß Ausführungsbeispielen der Erfindung eine Spulenwicklungsmatte 28 hergestellt, welche keinen radialen Aufbau des Wicklungskopfs 36 hat. Dies wird durch ein Verweben der Einzeldrähte in der Wellenwicklungsmatte 30, 30a möglich. Es wird eine verwebte Flachwicklung erreicht. Wie Fig. 3 und 4 zeigen, ist die Wicklungskopfhöhe Wh gleich der Wicklungshöhe h.

Die verwebte flachgewickelte Wellenwicklungsmatte 30a hat außerdem Vorteile hinsichtlich der Komplexität des Wickelschemas.

Bei der Schwertwicklung - schwertgewickelte Spulenwicklungsmatte 28a gemäß Fig. 5 und 6 - ist ein Lagentausch in jedem Wicklungskopf 36 möglich. Allerdings ist der Leitertausch nur sehr aufwendig zu realisieren. Bei der klassischen Flachwicklung - flachgewickelte Wellenwicklungsmatte 30b gemäß den Fig. 7 und 8 - ist es genau umgekehrt.

Mit den im Folgenden näher dargestellten Verfahren zum Herstellen einer gewebten flachgewickelten Wellenwicklungsmatte 30a gelingt es, die Vorteile beider bisheriger konventioneller Verfahren miteinander zu verbinden. Das im Folgenden dargestellte Verfahren ermöglicht es, eine flachgewickelte, verwebte Wellenwicklungsmatte herzustellen, mit welcher größere Freiheiten hinsichtlich Lagentausch und Leitertausch existieren.

Im Folgenden sind die drei sich ergebenden Wickelschemata nochmal dargestellt. Dabei wird deutlich, dass die Flachwicklung verwebt die größte Flexibilität bietet.

Die Tabelle 1 zeigt ein Beispiel für die Drahtanordnung in der Nut für die schwertgewickelte Spulenwicklungsmatte 28a, siehe [7], wobei a bis I die einzelnen Leiter (Drähte) bezeichnen. Ein Leitertausch ist nur an einzelnen Wicklungsköpfen 36 umsetzbar, während ein Lagentausch in jedem Wicklungskopf 36 möglich ist.

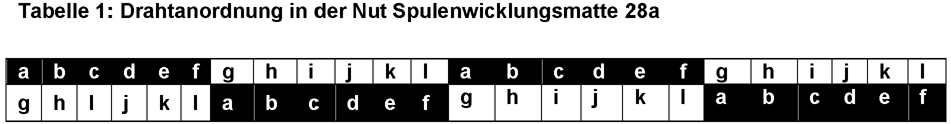

Die Tabelle 2 zeigt ein Beispiel für die Drahtanordnung in der Nut für die gestapelte oder gesteckte Wellenwicklungsmatte 30b, siehe [8], wobei wiederum a bis I die einzelnen Leiter (Drähte) bezeichnen. Ein Leitertausch ist in jedem Wicklungskopf 36 möglich, während ein Lagentausch nur an einzelnen Wicklungsköpfen 36 umsetzbar ist

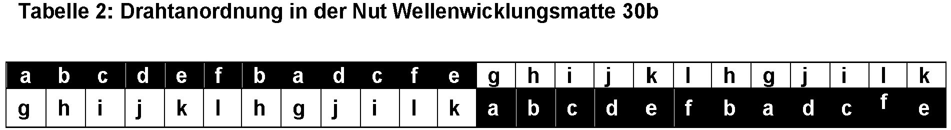

Die Tabelle 3 zeigt ein Beispiel für die Drahtanordnung in der Nut für die flachgewickelte verwebte Wellenwicklungsmatte 30a gemäß Ausführungsbeispielen der Erfindung, wobei wiederum a bis I die einzelnen Leiter (Drähte) bezeichnen. Ein Leitertausch ist in jedem Wicklungskopf 36 möglich; und auch ein Lagentausch ist in jedem Wicklungskopf 36 möglich.

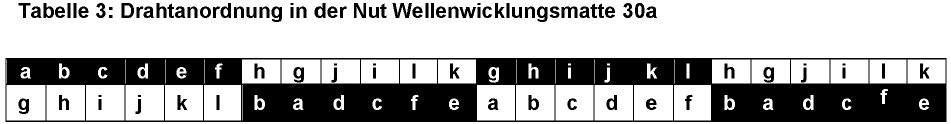

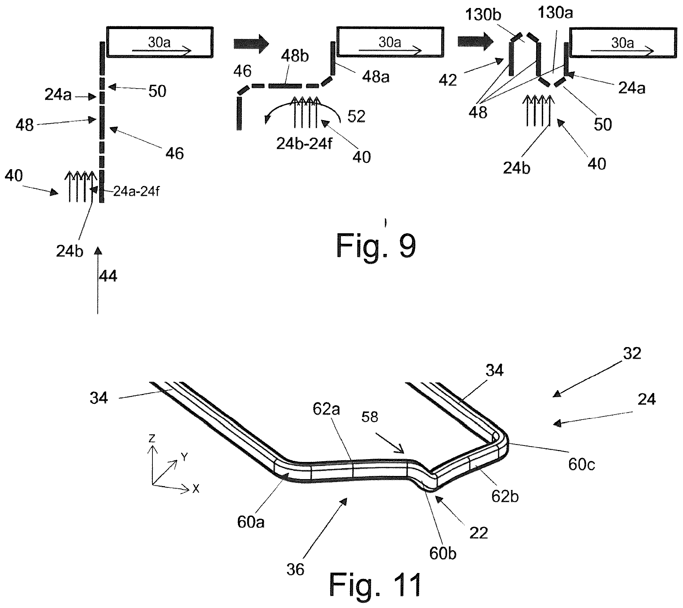

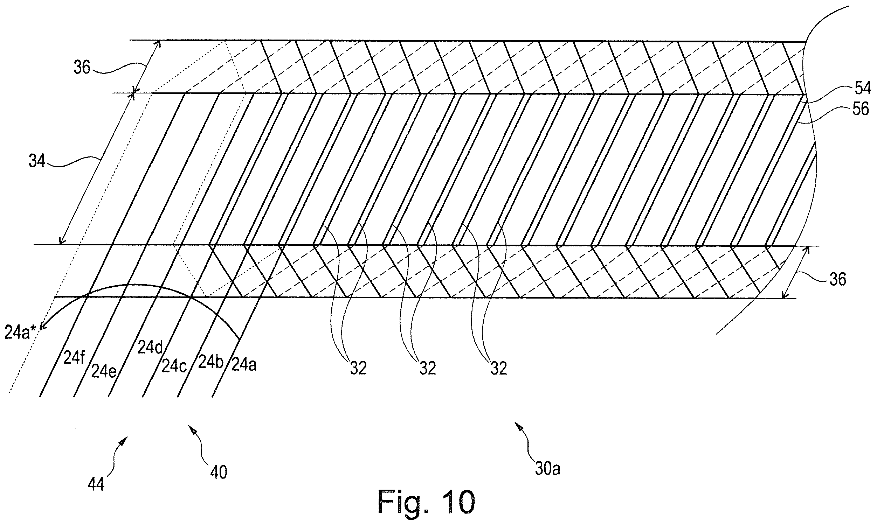

Fig. 9 und 10 zeigen schematisch ein Ausführungsbeispiel für ein Biegeverfahren im Zuge der Herstellung der flachgewickelten gewebten Wellenwicklungsmatte 30a.

Das Biegeverfahren dient zum Biegen von Drahtabschnitten für die Wellenwicklungsmatte 30a und umfasst die Schritte:
a) Bereitstellen einer Drahtgruppe 40 aus nebeneinander beabstandet parallel angeordneten Drähten 24, 24a-24f;
b) Biegen einer Mäanderform 42 an wenigstens einem ersten Draht 24a der Drahtgruppe 40 so, dass der wenigstens eine erste Draht 24a wenigstens einen zweiten Draht 24b der Drahtgruppe 40 kreuzt, und
c) Biegen der Mäanderform 42 an dem wenigstens einen zweiten Draht 24b der Drahtgruppe 40 so, dass der wenigstens eine zweite Draht 24b den wenigstens einen ersten Draht 24a kreuzt.

Damit wird ein Biegeverfahren geschaffen, welches ermöglicht, die flachgewickelte gewebte Wellenwicklungsmatte 30a herzustellen. Dabei werden die Drähte 24, 24a-24f beim Biegen direkt ineinander verwebt.

Fig. 9 stellt das Biegeverfahren schematisch dar. Die Drahtgruppe 40 wird, siehe Fig. 9 ganz links, von einer Drahtgruppenzustelleinrichtung 44 (später näher erläutert) bereitgestellt. Ein erster Draht 24a wird in eine Biegekette 46 eingeführt. Die Biegekette 46 weist, wie dies später noch näher erläutert wird, zueinander um senkrecht zu der Zeichenebene von Fig. 9 angeordnete Schwenkachsen 130a, 130b, 130c verschwenkbare Klemmelemente 48 und Formelemente 50 auf. Vorzugsweise weisen die Klemmelemente 48 einen ersten Halter 48a und einen zweiten Halter 48b auf.

Wie in der mittleren Darstellung und rechten Darstellung von Fig. 9 gezeigt, wird der Draht 24a an denjenigen Drahtabschnitten, die später die geradlinigen Drahtabschnitte 34 bilden sollen, mittels der Halter 48a, 48b der Klemmelemente 48 eingeklemmt. Die dazwischen liegenden Abschnitte werden an den Formelementen 50 geformt, um so die Wicklungsköpfe 36 zu bilden. Durch Verschwenken der Biegekettenelemente 48, 50 wird die Mäanderform 42 mit einer ersten und einer zweiten Halbwelle gebildet, gleichzeitig dabei wird die Biegekette 46 mit dem eingefassten Draht 24a über die anderen Drähte 24b-24f der Drahtgruppe 40 gehoben (bei anderen Ausführungsformen kann die Biegekette 46 auch unter der Drahtgruppe 40 hindurch geführt werden). Dadurch erfolgt, wie durch den Pfeil darstellt, ein Verweben 52.

Indem dieser Vorgang nacheinander an den anderen Drähten 24b-24f wiederholt wird, werden so stückweise alle Drähte 24a-24f gebogen und verwebt, um so stückweise die Wellenwicklungsmatte 30a zu bilden.

Die Drähte 24a-24f der Einzelmatte werden zunächst parallel als Drahtpaket 40 zugeführt. Anschließend wird mindestens ein Draht 24a in die Biegekette 46 aufgenommen und in eine Mäanderform 42 gebogen. Dabei kreuzt er die restlichen Drähte 24b-24f. Diese Bewegung wird solange ausgeführt, bis die gesamte Matte hergestellt ist. Durch das stetige Kreuzen der Drähte 24 werden die Drähte 24 ineinander verflochten.

Fig. 10 zeigt die Drahtgruppe 40 und die bereits teilweise gefertigte Wellenwicklungsmatte 30a bei einem Biegevorgang. Bei der Wellenwicklungsmatte 30a sind jeweils die bereits fertig gestellten Wicklungsköpfe 36 und die geradlinigen Drahtabschnitte 34 in einer oberen Lage 54 und einer unteren Lage 56 dargestellt.

Das Biegen erfolgt über die mehreren Klemmelemente 48 und Formelemente 50, welche jeweils Teile des Drahts 24a klemmen und synchron zueinander verfahren werden können. Bei einigen Ausführungsformen kann der Abstand der Klemm- und Formelemente 48, 50 flexibel zueinander geändert werden, um verschiedene parallele Abstände der geradlinigen Drahtabschnitte 34 der Wellenwicklungsmatte 30a (Shiftmaß) zu ermöglichen. Die Elemente 48, 50 können also zueinander auf veränderbaren definierten Bahnkurven verfahren.

Optional können die Elemente 48, 50 auch in der Höhe zueinander versetzt werden, um Höhenversätze in den Leiter zu biegen.

Ein Grundprinzip bevorzugter Ausgestaltungen ist also, immer die in Taktrichtung vorne liegenden Leiter 24, 24a-24f über die anderen zu biegen, wodurch die Drähte 24 verwebt werden.

Der Prozess wird so oft wiederholt, bis die notwendige Mattenlänge erreicht ist.

Ein Vorteil des Biegeverfahrens, des dieses verwendenden Herstellverfahrens sowie der Vorrichtungen zum Durchführen derselben liegt darin, dass die Einzeldrähte gebogen und zeitgleich zu einer Matte verwebt werden. Außerdem kann eine Matte hergestellt werden, welche keinen radialen Wicklungskopfaufbau zulässt. Die Verfahren und Vorrichtungen gemäß Ausführungsbeispielen der Erfindung verbinden also die Vorteile der Schwertwicklung und der Flachwicklung mit dem zusätzlichen Vorteil des radial kompakteren Wicklungskopfs 36.

Fig. 11 zeigt eine perspektivische Darstellung des Wicklungskopfes 36. Der Wicklungskopf 36 ist hier ausgeführt wie bei der Flachwicklung gemäß [8], allerdings nur mit einem Höhenversatz 58 pro Wicklungskopf 36. Durch den Höhenversatz 58 ergibt sich der oben anhand Fig. 2 erläuterte Sprung 22 von einer Lage 54, 56 in eine andere Lage 56, 54. Bei den dargestellten Ausführungsbeispielen weist jeder Wicklungskopf 36 eine Dachbiegung mit einem ersten bis dritten Biegebereich 60a-60c und einem ersten und zweiten geradlinigen Abschnitt 62a, 62b auf. Ein erster und dritter Biegebereich 60a und 60c bilden die Übergänge zu den benachbarten geradlinigen Drahtabschnitten 34. Daran schließt sich jeweils ein geradliniger Abschnitt 62a, 62b an. Zwischen den geradlinigen Abschnitten 62a, 62b ist der zentrale zweite Biegebereich 62b ausgebildet. Der einzige Höhenversatz 58 ist am zentralen Biegebereich 62b ausgebildet. Die anderen Biegebereiche 62a, 62c weisen keinen Höhenversatz auf. Im Gegensatz zu den Wicklungsköpfen 36 der aus [8] bekannten Wellenwicklungsmatte 30b ist also kein Höhenversatz am Nutausgang erforderlich. Der Höhenversatz 58 wird durch eine Sprungbiegung eingebracht.

In Fig. 12 ist eine Ausführungsform der verwebten flachgewickelten Wellenwicklungsmatte 30a dargestellt, welche hier mit einem kontinuierlichen Leitertausch ausgeführt ist. Außerdem ist die gezeigte Ausführungsform der Wellenwicklungsmatte 30a treppenförmig, wie an den Absätzen 64 innerhalb der Wellenwicklungsmatte 30a zu erkennen ist. Die Treppenform erleichtert das mehrlagige Einbringen der Wellenwicklungsmatte 30a in ein ringförmiges Bauteil 12, wie insbesondere das Gehäuse 10 des Stators 14. Der Absatz 64 wird durch eine entgegengesetzte Richtung des Höhenversatzes 58 realisiert.

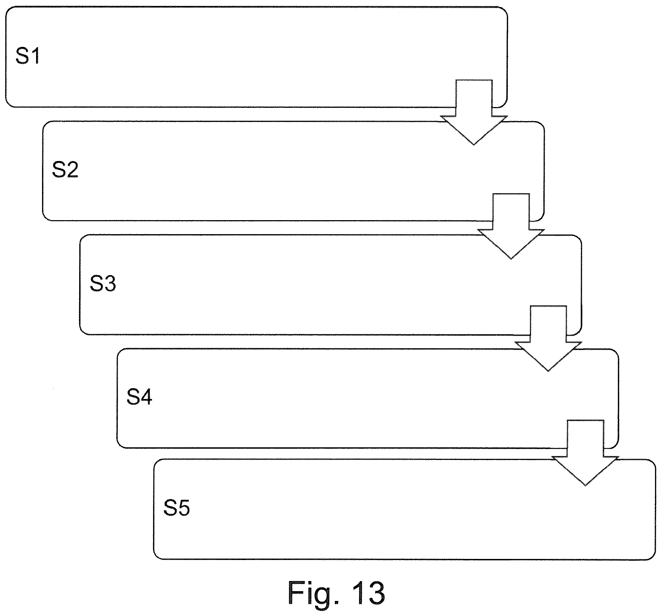

Fig. 13 zeigt ein Flussdiagramm für ein Ausführungsbeispiel eines Herstellverfahrens für die flachgewickelte verwebte Wellenwicklungsmatte 30a. Die Schritte darin bedeuten:
S1 Abisolieren (optional)
   - Ein Abisolieren der Bereiche der Drähte 24a-24f, die später als Drahtenden zur Kontaktierung zu verwenden sind, ist vorher möglich.
   - Dies kann mechanisch und/oder mittels Laser oder dergleichen erfolgen.
S2 Ablängen (optional)
   - Die einzelnen Drähte 24a-24f können entsprechend der gewünschten Länge vorher von einer Drahtrolle abgelängt werden.
   - Insbesondere ist ein Vorkonfektionieren der Drähte 24a-24f, z.B. in einem Puffermagazin möglich.
S3 Sprung biegen (optional)
   - Insbesondere zum Einbringen der Höhenversätze 58
   - Sprünge können vorab durch Kröpfen des Drahtes 24a-24f an vorbestimmten Stellen eingebracht werden
   - Alternativ kann das Kröpfen/die Sprungbiegung zeitgleich beim Biegeverfahren erfolgen
   - Sprungrichtung und Versatzhöhe sind vorzugsweise flexibel einstellbar S4 Biegen/Übersetzen
   - Biegen einer Mäanderform 42 mit gleichzeitigem Übersetzen (alternativ Unterheben) der gebogenen Drähte 24a-24f
   - Mäanderweitenmaß (Shiftmaß) kann innerhalb einer Wellenwicklungsmatte 30a variieren
   - Übersetzen auf verschiedene Arten realisierbar
S5 Wellenwicklungsmatte 30a ausbringen
   - Synchrones Austakten der Wellenwicklungsmatte 30a, beispielsweise mit einem Rechen 66.

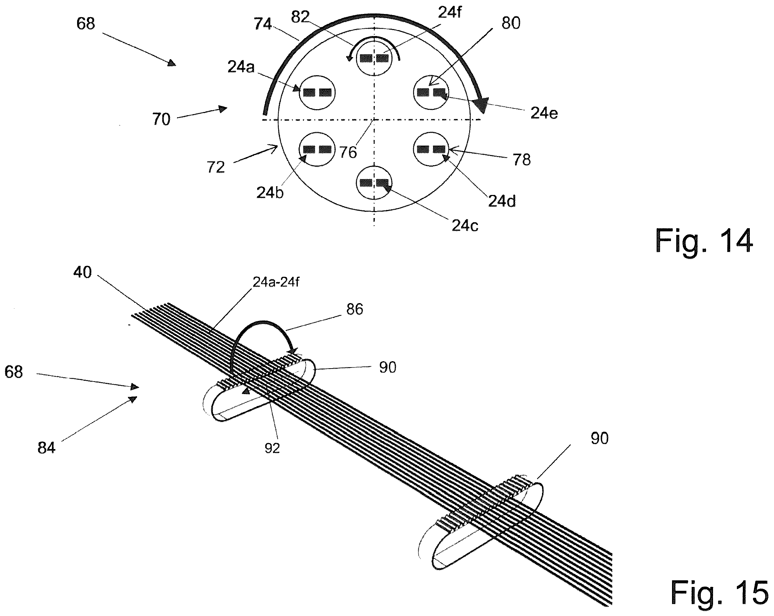

Wie oben erläutert, wird bei einer Ausgestaltung des Biegeverfahrens der jeweils zu einer Mäanderform 42 zu biegende Draht 24a über die anderen Drähte 24b-24f des Drahtpakets 40 übersetzt. Bei anderen Ausgestaltungen wird der jeweils zu biegende Draht 24a unter die anderen Drähte 24b-24f des Drahtpakets 40 gehoben. Der jeweils gebogene Draht kreuzt also die anderen Drähte, die nachfolgend gebogen werden. Anstelle des Biegens eines einzelnen Drahtes könnten auch mehrere Drähte gleichzeitig gebogen werden und entsprechend zum Kreuzen quer bewegt werden. Der verbleibende zuzuführende Bereich des jeweils zu biegenden Drahts 24a wird also jeweils quer zu der Längserstreckungsrichtung des Drahtpakets 40 relativ zu den anderen Drähten 24b-24f bewegt. Dies erfolgt mittels einer Querbewegungseinrichtung 68, von der im Folgenden zwei Ausführungsbeispiele anhand der Darstellung in den Fig. 14 und 15 erläutert werden.

Die Funktion der Querbewegungseinrichtung 68 wird anhand des Ausführungsbeispiels des Verfahrens erläutert, bei dem die zu biegenden Drähte übersetzt werden, d.h. bei dem die zu biegenden Drähte über die anderen gehoben werden. Eine umgekehrte Bewegung - Unterführung der zu biegenden Drähte - ist aber grundsätzlich ebenfalls möglich, wie oben bereits erläutert.

Das Übersetzen in der Drahtzuführung wird durchgeführt, damit sich die Drähte aufgrund des Biegeablaufes nicht ineinander tordieren.

In Fig. 14 ist als ein erstes Ausführungsbeispiel für die Querbewegungseinrichtung 68 ein Drehmagazin 70 dargestellt. Das Drehmagazin 70 weist zum Beispiel eine (oder mehrere in Axialrichtung beabstandete) Rotationsscheibe 72 auf, die sich in eine erste Drehrichtung 74 um eine zentrale Achse 76 dreht. In der Rotationsscheibe 72 sind pro Draht 24a-24f oder Drahtpaar Läufe 78 mit Drahtunterstützungen 80 für die Drähte 24a-24f drehbar angeordnet. Die Läufe 78 drehen um eigene Achsen in der zu der ersten Drehrichtung 74 entgegengesetzten zweiten Drehrichtung 82 mit der gleichen Drehgeschwindigkeit wie die Rotationsscheibe 72, so dass die Drahtunterstützungen 80 stets in der gleichen Orientierung stehen. Beispielsweise sind die Drähte 24a-24f in jedem Lauf 78 immer waagerecht.

Fig. 14 zeigt somit ein Übersetzen durch ein rotierendes Magazin 70, welches einzelne Läufe 78 für einen oder mehrere Drähte 24a-24f hat. Um eine Torsion der Drähte 24a-24f zu verhindern, drehen sich die Läufe 78 gegensätzlich zur Drehrichtung des Magazins 70.

In Fig. 15 ist als ein zweites Ausführungsbeispiel für die Querbewegungseinrichtung 68 ein Linearmagazin 84 dargestellt. Das Linearmagazin 84 ist beispielsweise als Riemenmagazin ausgeführt. Das Linearmagazin 84 weist einen schematisch durch einen Bewegungspfeil dargestellten und in eine Querrichtung bewegbaren Greifer 86 für den zu biegenden Draht 24a und eine Transporteinrichtung 88 für die verbleibenden Drähte 24b-24f des Drahtpakets 40 auf. Die Transporteinrichtung 88 weist z.B. mehrere in Längsrichtung des Drahtpakets 40 beabstandete in die entgegengesetzte Querrichtung wie der Greifer 86 bewegbare Stützelemente, insbesondere in Form von Riemen 90, mehr insbesondere Zahnriemen, auf.

Die Funktion des Linearmagazins 68 ist wie folgt. Das Übersetzen des zu biegenden Drahts 24a erfolgt durch beispielsweise den Greifer 86. Es erfolgt ein Weitertakten der verbleibenden Drähte 24b-24f über einen Riemen 90 oder ähnliches. Die Taktrichtung des Riemens 90 ist mit dem Pfeil 92 gekennzeichnet Hierbei wird immer einer oder mehrere Drähte 24a, welche gebogen werden, über die anderen Drähte 24b-24f geführt und die restlichen Drähte 24b-24f über einen Riemen 90 weitergetaktet.

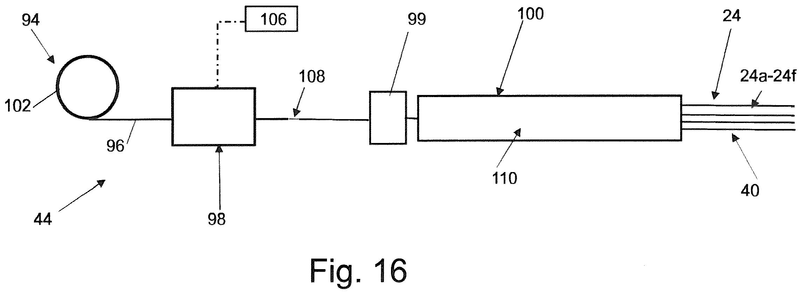

Im Folgenden wird ein Ausführungsbeispiel für die Drahtgruppenzustelleinrichtung 44 anhand von Fig. 16 erläutert. Die Drahtgruppenzustelleinrichtung 44 gemäß dem Ausführungsbeispiel von Fig. 16 weist eine Drahtbereitstelleinrichtung 94 zum Bereitstellen eines Endlosdrahtes 96, eine Isolierungsentfernungseinrichtung 98 zum bereichsweisen Entfernen einer Isolierung an dem Endlosdraht 96, eine Drahtschneideeinrichtung 99 zum Schneiden des Endlosdrahtes 96, um so die Drähte 24a bis 24f zu erhalten, und eine Drahtgruppierungseinrichtung 100 zum Anordnen der Drähte 24a-24f zu der Drahtgruppe 40 auf.

Die Drahtbereitstelleinrichtung 94 weist z.B. eine Rollenaufnahme zum Aufnehmen einer Drahtrolle 102 auf, von der der Endlosdraht 96 abgerollt wird. Der Endlosdraht 96 ist als Flachdraht mit rechteckigem Profil und einer Isolierungsschicht an der Oberfläche ausgebildet. Ein mögliches Ausführungsbeispiel für die Drahtbereitstelleinrichtung 94 ist der folgenden Literaturstelle
[13] DE 10 2018 102 914 A1 entnehmbar, auf welche für weitere Einzelheiten ausdrücklich verwiesen wird.

Die Isolierungsentfernungseinrichtung 98 ist beispielsweise derart ausgebildet, wie dies in der Literaturstelle
[14] deutsche Patentanmeldung 10 2019 121 179.4 (nicht vorveröffentlicht) beschrieben und gezeigt ist. Insbesondere hat die Isolierungsentfernungseinrichtung 98 eine Drahtführung 104 und einen Laser 106, dessen Strahlung auf den Endlosdraht 96 zum bereichsweisen Entfernen der Isolierschicht geleitet wird. Ein abisolierter Drahtbereich des Endlosdrahtes 96 mit entfernter Isolierung ist bei 108 dargestellt. Solche abisolierten Drahtbereiche 108 werden in regelmäßigen Abständen, die der Länge der Drähte 24a-24f der Drahtgruppe 40 entsprechen, durch Entfernen der Isolierschicht in den Endlosdraht 96 eingebracht.

Die Drahtschneideeinrichtung 99 weist ein geeignetes Schneidwerk (nicht dargestellt) zum Schneiden des Endlosdrahtes 96 auf. Das Schneidwerk ist derart gesteuert, dass der Schnitt mittig in dem abisolierten Bereich 108 durchgeführt wird.

Die Drahtgruppierungseinrichtung 100 weist ein Puffermagazin 110 zum Aufnehmen der abgelängten Drähte 24a-24f auf und eine Ausgabeeinrichtung, mit der die Drähte 24a-24f aus dem Puffermagazin 110 entnommen werden und zum Bilden der Drahtgruppe 40 so angeordnet werden, dass die Drähte 24a-24f im Wesentlichen parallel zueinander beabstandet verlaufen. Diese Drahtgruppe 40 wird dann über die Querbewegungseinrichtung 68 der Biegekette 46 zugeführt, wie dies in Fig. 9 und 10 angedeutet ist.

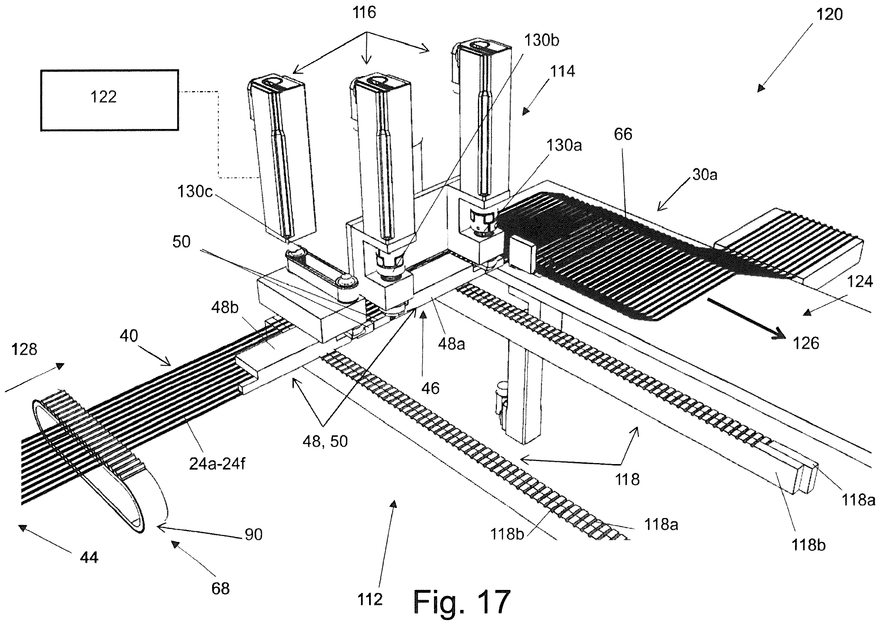

Ein Ausführungsbeispiel für eine Herstellvorrichtung 120 zum Herstellen der flachgewickelten gewebten Wellenwicklungsmatte 30a ist in Fig. 17 in Übersicht dargestellt. Die Herstellvorrichtung 120 weist eine Biegevorrichtung 112, eine Steuerung 122 sowie eine Wellenwicklungsmattenaufnahme 124 auf.

Die Biegevorrichtung 112 ist zur Verwendung bei der Herstellung der flachgewickelten gewebten Wellenwicklungsmatte 30a zum Bilden der Spulenwicklung 20 des Bauteils 12 einer elektrischen Maschine ausgebildet und dazu ausgebildet, das oben anhand der Fig. 9 und 10 erläuterte Biegeverfahren durchzuführen. Die Herstellvorrichtung 120 ist dazu ausgebildet, durch wiederholtes Durchführen des Biegeverfahrens die Wellenwicklungsmatte 30a gemäß der in Fig. 13 dargestellten Prozesskette herzustellen.

Die Biegevorrichtung 112 umfasst die in Fig. 16 dargestellte Drahtgruppenzustelleinrichtung 44 mittels der die Drahtgruppe 40 aus nebeneinander beabstandet parallel angeordneten Drähten 24a-24f zugestellt wird.

Weiter umfasst die Biegevorrichtung 112 eine Flachbiegeeinrichtung 114 zum derartigen Biegen eines Biegeabschnitts wenigstens eines Drahts 24a der Drahtgruppe 40 in die Mäanderform 42, dass der Biegeabschnitt die verbleibenden Drähte 24b-24f der Drahtgruppe 40 kreuzt, und die Querbewegungseinrichtung 68 zum relativen Bewegen des wenigstens einen zu biegenden Drahts 24a und der verbleibenden Drähte 24b-24f in einer Richtung quer zu der Längserstreckung der durch die Drahtgruppenzustelleinrichtung 44 zugestellten Drähte 24a-24f.

Die Flachbiegeeinrichtung 114 umfasst die Biegekette 46 mit den Klemmelementen 48 und den Formelementen 50 sowie Aktoren 116 zum Bilden der Biegeachsen und zum Bewegen der Schwenkbewegungen der Klemmelemente 48 und der Formelemente 50 sowie zum Bewegen von nicht näher dargestellten Klemmbacken der Klemmelemente 48, um die geradlinigen Drahtabschnitte 34 festzuhalten und zu klemmen. Die Klemmelemente 48 weisen mehrere Halter 48a, 48b zum Halten mehrerer geradliniger Drahtabschnitte 34 des Biegeabschnitts aufweist, die mittels der Aktoren 116 in einer Bewegungsrichtung aufeinander zu und voneinander weg bewegbar sind und relativ zueinander um im Wesentlichen quer zu der Bewegungsrichtung und im Wesentlichen parallel zueinander verlaufende Schwenkachsen 130a, 130b, 130c schwenkbar sind. Die mehreren Formelemente 50 sind zum Formen von gebogenen Bereichen des Biegeabschnitts ausgebildet. Die Formelemente 50 weisen nicht näher dargestellte Biegeformen auf, deren Konturen den Biegebereichen 60a-60c entsprechen, um an diesen Biegeformen die Biegebereiche 60a-60c schonend zu formen. Wenigstens einer der Aktoren 116 ist weiter derart ausgestaltet, dass die Flachbiegeeinrichtung 114 mit zumindest einigen Elementen der Biegekette 46 relativ zu den verbleibenden Drähten 24b-24f der Drahtgruppe 40 angehoben werden kann, um den in die Mäanderform 42 zu biegenden Biegeabschnitt des zu biegenden Drahtes 24a über die anderen Drähte 24b-24f der Drahtgruppe 40 zu heben. Gleichzeitig erfolgt ein Umsetzen des noch zuzuführenden Bereichs des zu biegenden Drahtes wie zuvor beschrieben mittels der Querbewegungseinrichtung 68.

Weiter umfasst die Biegevorrichtung 112 eine Sprungbiegungseinrichtung 118 zum Ausbilden wenigstens einer Kröpfung in dem Biegeabschnitt. Damit lässt sich Schritt S3 des Verfahrensablaufs von Fig. 13 durchführen. In dem gezeigten Ausführungsbeispiel sind zwei Sprungbiegungseinrichtungen 118 vorgesehen, mittels denen an jeder der beiden Halbwellen der Mäanderform 42, deren Umbiegung jeweils entgegengesetzte Wicklungsköpfe 36 bilden, eine Biegung des Sprungs 22 - siehe Höhenversatz 58 in Fig. 11 - durchführbar ist. Jede Sprungbiegungseinrichtung 118 weist zwei relativ zueinander verfahrbare Greifer oder Aufnahmeelemente 118a, 118b auf, die die geradlinigen Abschnitte 62a, 62b klemmend aufnehmen können. Bei Relativverschiebung der Aufnahmeelemente 118a, 118b lässt sich so zwischen den geradlinigen Abschnitten 62a, 62b der Höhenversatz 58 einbringen. Dies erfolgt bei dem gezeigten Ausführungsbeispiel bevor die Biegebereiche 60a-60c beim Ausbilden der Mäanderform 42 gebogen werden. Die Aufnahmeelemente 118a, 118b sind in dem Beispiel als bewegbare Balken mit Kammstrukturen ausgebildet.

Wie oben erläutert, kann der Höhenversatz 58 alternativ auch während des Formens der Mäanderform 42 eingebracht werden. Bei einer entsprechenden Ausführungsform der Biegevorrichtung 112 sind Klemmelemente 48, 48a, 48b und Formelemente 50 der Biegekette 46 in Höhenrichtung zueinander bewegbar, um zwischen den jeweils daran gehaltenen Abschnitten 62a, 62b den Höhenversatz 58 und damit den Sprung 22 einzubringen.

Die Wellenwicklungsmattenaufnahme 124 weist den oben bereits erwähnten Rechen 66 auf. Der Rechen 66 weist nicht näher dargestellte Vorsprünge auf, die zwischen geradlinige Drahtabschnitte 34 der Wellenwicklungsmatte 30a eingreifen. Der Rechen 66 ist in einer Abtransportrichtung 126 (auch Taktrichtung der Wellenwicklungsmatte 30a genannt) quer zu der Drahtzuführrichtung 128 taktweise bewegbar.

Die Steuerung 122 ist derart programmiert und mit den Einheiten der Herstellvorrichtung 120 derart verbunden, dass diese zum Durchführen des in Fig. 13 dargestellten Herstellverfahrens angesteuert wird.

### Bezugszeichenliste:

- 10: Gehäuse
- 12: Bauteil
- 14: Stator
- 16: Nut
- 20: Spulenwicklung
- 22: Sprung
- 24: Draht
- 24a-24f: erster bis sechster Draht
- 28: Spulenwicklungsmatte
- 28a: Wickelmatte (erstes Vergleichsbeispiel, hergestellt durch Schwertwickeln)
- 30: Wellenwicklungsmatte
- 30a: flachgewickelte verwebte Wellenwicklungsmatte
- 30b: konventionelle Wellenwicklungsmatte (zweites Vergleichsbeispiel)
- 32: Wellenwicklungsdraht
- 34: geradliniger Drahtabschnitt
- 36: Wicklungskopf
- 40: Drahtgruppe
- 42: Mäanderform
- 44: Drahtgruppenzustelleinrichtung
- 46: Biegekette
- 48: Klemmelement
- 48a: erster Halter
- 48b: zweiter Halter
- 50: Formelement
- 52: Verweben
- 54: obere Lage
- 56: untere Lage
- 58: Höhenversatz
- 60a-60c: erster bis dritter Biegebereich
- 62a, 62b: erster und zweiter geradliniger Abschnitt
- 64: Absatz
- 66: Rechen
- 68: Querbewegungseinrichtung
- 70: Drehmagazin
- 72: Rotationsscheibe
- 74: erste Drehrichtung
- 76: zentrale Achse
- 78: Lauf
- 80: Drahtunterstützung
- 82: zweite Drehrichtung
- 84: Linearmagazin
- 86: Greifer
- 88: Transporteinrichtung
- 90: Riemen
- 92: Taktrichtung Riemen
- 94: Drahtbereitstelleinrichtung
- 96: Endlosdraht
- 98: Isolierungsentfernungseinrichtung
- 99: Drahtschneideeinrichtung
- 100: Drahtgruppierungseinrichtung
- 102: Drahtrolle
- 104: Drahtführung
- 106: Laser
- 108: abisolierter Drahtbereich
- 110: Puffermagazin
- 112: Biegevorrichtung
- 114: Flachbiegeeinrichtung
- 116: Aktor
- 118: Sprungbiegungseinrichtung
- 118a: erstes Aufnahmeelement
- 118b: zweites Aufnahmeelement
- 120: Herstellvorrichtung
- 122: Steuerung
- 124: Wellenwicklungsmattenaufnahme
- 126: Abtransportrichtung
- 128: Drahtzuführrichtung
- 130a: erste Schwenkachse
- 130b: zweite Schwenkachse
- 130c: dritte Schwenkachse
- h: Wicklungshöhe
- Wh: Wicklungskopfhöhe

## Patentansprüche

1. Biegeverfahren zum Biegen von Drahtabschnitten für eine Wellenwicklungsmatte (30a) zum Bilden einer Spulenwicklung (20) eines Bauteils (12) einer elektrischen Maschine, umfassend:
a) Bereitstellen einer Drahtgruppe (40) aus nebeneinander beabstandet parallel angeordneten Drähten (24, 24a-24f);
b) Biegen einer Mäanderform (42) an wenigstens einem ersten Draht (24a) der Drahtgruppe (40) so, dass gleichzeitig der wenigstens eine erste Draht (24a) wenigstens einen zweiten Draht (24b) der Drahtgruppe (40) kreuzt, und
c) Biegen der Mäanderform (42) an dem wenigstens einen zweiten Draht (24b) der Drahtgruppe (40) so, dass gleichzeitig der wenigstens eine zweite Draht (24b) den wenigstens einen ersten Draht (24a) kreuzt,
**dadurch gekennzeichnet,**
**dass** der Schritt b) und/oder der Schritt c) den Schritt enthalten:
Aufeinander zu Bewegen eines ersten und eines zweiten Halters (48a, 48b) zum Halten eines Drahtabschnittes in einer Bewegungsrichtung, die im Wesentlichen parallel zu der Längsrichtung der Drahtgruppe (40) gerichtet ist, und gleichzeitiges Verschwenken des ersten Halters (48a) um eine erste Schwenkachse (130a) und des wenigstens einen zweiten Halters (48b) um eine zweite Schwenkachse (130b), wobei die Schwenkachsen (130a, 130b) im Wesentlichen senkrecht zu der Erstreckung der Drahtgruppe (40) gerichtet sind.

2. Biegeverfahren nach Anspruch 1,
**dadurch gekennzeichnet,**
**dass** der Schritt b) und/oder der Schritt c) wenigstens einen oder mehrere der Schritte enthält:
bc1) Flachbiegen der Mäanderform (42) im Wesentlichen in einer Ebene;
bc2) Umbiegen einer ersten Halbwelle um eine Biegeform und Umbiegen einer zweiten Halbwelle um eine Biegeform;
bc3) Biegen der Mäanderform (42) in einer sich im Wesentlichen parallel zu der Erstreckung der bereitgestellten Drahtgruppe (40) erstreckenden Ebene;
bc4) Biegen zumindest des jeweils am nächsten an einer ersten Längsseite der Drahtgruppe (40) befindlichen Drahtes (24a) zu der entgegen gerichteten zweiten Längsseite der Drahtgruppe (40) hin über die verbleibenden Drähte (24b-24f) der Drahtgruppe (40) hinweg;
bc5) Biegen der Mäanderform (42) an dem wenigstens einen ersten Draht (24a) der Drahtgruppe (40) unter Übersetzen des wenigstens einen ersten Drahtes (24a) über den wenigstens einen zweiten Draht (24b) der Drahtgruppe und Biegen der Mäanderform (42) an dem wenigstens einen zweiten Draht (24b) der Drahtgruppe (40) unter Übersetzen des wenigstens einen zweiten Drahts (24b) über den wenigstens einen ersten Draht (24a);
bc6) Biegen der Mäanderform (42) an dem wenigstens einen ersten Draht (24a) der Drahtgruppe (40) unter Unterführen des wenigstens einen ersten Drahtes (24a) unter wenigstens einen zweiten Draht (24b) der Drahtgruppe (40) und Biegen der Mäanderform (42) an dem wenigstens einen zweiten Draht (24b) der Drahtgruppe (40) unter Unterführen des wenigstens einen zweiten Drahts (24b) unter den wenigstens einen ersten Draht (24a);
bc7) Ausbilden einer Kröpfung in einem Drahtabschnitt des ersten und/oder zweiten Drahts (24a, 24b), an dem eine Umbiegung der Mäanderform (42) gebildet oder zu bilden ist;
bc8) Biegen der Mäanderform (42) des ersten und des zweiten Drahtes (24a, 24b) mit gleichem oder unterschiedlichem Mäanderweitenmaß;
bc9) Übereinanderbiegen des jeweils in Taktrichtung vorne liegenden wenigstens einen Drahtes (24a) der Drahtgruppe über die anderen Drähte (24b-24f) der Drahtgruppe (40), um so die Drähte (24, 24a-24f) zu verweben;
bc10) Relativbewegen des jeweils wenigstens einen zu biegenden Drahts (24a) relativ zu den anderen Drähten (24b-24f) in einer Richtung quer zur Längserstreckung der Drähte (24, 24a-24f);
bc11) Relativbewegen des jeweils wenigstens einen zu biegenden Drahts (24a) relativ zu den anderen Drähten (24b-24f) in einer Richtung quer zur Längserstreckung der Drähte (24, 24a-24f) mittels eines insgesamt drehbaren Drehmagazins (70) mit darin drehbar gelagerten Drahtunterstützungen (80), in denen die Drähte (24a-24f) gehalten sind;
bc12) Relativbewegen des jeweils wenigstens einen zu biegenden Drahts (24a) relativ zu den anderen Drähten (24b-24f) in einer Richtung quer zur Längserstreckung der Drähte (24, 24a-24f) mittels Erfassen des zu biegenden Drahts (24a) mit einem sich in eine Querrichtung bewegenden Greifer (86) und gemeinsames Bewegen der verbleibenden Drähte (24b-24f) in die entgegengesetzte Querrichtung;
bc13) Biegen der Mäanderform (42) an relativ zueinander bewegbaren und verschwenkbaren Klemm- und Formelementen (48, 50).

3. Biegeverfahren nach einem der voranstehenden Ansprüche,
**dadurch gekennzeichnet,**
**dass** die Schritte b) und c) nacheinander wiederholt werden, bis an einem Längenabschnitt der Drahtgruppe (40) Mäanderformen (42) an allen Drähten (24a-24f) der Drahtgruppe (40) gebildet sind.

4. Herstellverfahren zum Herstellen einer Wellenwicklungsmatte (30a) zum Bilden einer Spulenwicklung (20) eines Bauteils (12) einer elektrischen Maschine, umfassend:
Durchführen des Biegeverfahrens nach einem der voranstehenden Ansprüche an einem Längenabschnitt der Drahtgruppe (40) und Wiederholen des Biegeverfahrens an weiteren Längenabschnitten, bis die Wellenwicklungsmatte (30a) in der gewünschten Länge gebildet ist.

5. Herstellverfahren nach Anspruch 4,
**gekennzeichnet durch** wenigstens einen oder mehrere der folgenden Schritte:
5.1 Abisolieren von Drahtbereichen (108) der Drähte (24);
5.2 Ablängen der Drähte (24) vor dem Biegeverfahren auf eine vorbestimmte Länge;
5.3 Lagern der bereitzustellenden Drähte (24) und/oder der bereitzustellenden Drahtgruppe (40) in einem Puffermagazin (110);
5.4 Biegen von Sprüngen (22) in vorbestimmte Abschnitte wenigstens einer oder aller der Drähte (24);
5.5 Biegen von Sprüngen (22) an unterschiedlichen Abschnitten und/oder unterschiedlichen Drähten (24a-24f) der Drahtgruppe (40) mit unterschiedlichen Sprungrichtungen und/oder unterschiedlichen Versatzhöhen;
5.6 taktweises Durchführen des Biegeverfahrens;
5.7 Abführen des bereits fertig gestellten Bereichs der Wellenwicklungsmatte (30a) auf einer Wellenwicklungsmattenaufnahme (124);
5.8 Abführen des bereits fertig gestellten Bereichs der Wellenwicklungsmatte (30a) quer zu der Längserstreckung der zugeführten Drahtgruppe (40);
5.9 Abführen des bereits fertig gestellten Bereichs der Wellenwicklungsmatte (30a) auf einem Rechen (66);
5.10 Abführen des bereits fertig gestellten Bereichs der Wellenwicklungsmatte (30a) **durch** synchrones Austakten der Wellenwicklungsmatte (30a).

6. Biegevorrichtung (112) zur Verwendung bei der Herstellung einer Wellenwicklungsmatte (30a) zum Bilden einer Spulenwicklung (20) eines Bauteils (12) einer elektrischen Maschine, umfassend
eine Drahtgruppenzustelleinrichtung (44) zum Zustellen einer Drahtgruppe (40) aus nebeneinander beabstandet parallel angeordneten Drähten (24a-24f) und
eine Flachbiegeeinrichtung (114) zum derartigen Biegen eines Biegeabschnitts wenigstens eines Drahts (24a) der Drahtgruppe (40) in eine Mäanderform (42), dass gleichzeitig der Drahtabschnitt die verbleibenden Drähte (24b-24f) der Drahtgruppe (40) kreuzt und
eine Querbewegungseinrichtung (68) zum relativen Bewegen des wenigstens einen zu biegenden Drahts (24a) und der verbleibenden Drähte (24b-24f) in einer Richtung quer zu der Längserstreckung der durch die Drahtgruppenzustelleinrichtung (44) zugestellten Drähte (24a-24f), **dadurch gekennzeichnet,**
**dass** die Flachbiegeeinrichtung (114) mehrere Halter (48a, 48b) zum Halten mehrerer geradliniger Drahtabschnitte (34) des Biegeabschnitts aufweist, die in einer Bewegungsrichtung aufeinander zu und voneinander weg bewegbar sind und relativ zueinander um im Wesentlichen quer zu der Bewegungsrichtung und im Wesentlichen parallel zueinander verlaufende Schwenkachsen (130a, 130b, 130c) gleichzeitig schwenkbar sind.

7. Biegevorrichtung (112) nach Anspruch 6,
**dadurch gekennzeichnet,**
**dass** die Flachbiegeeinrichtung (114)
7.1 mehrere Formelemente (50) zum Formen von gebogenen Bereichen (60a-60c) des Biegeabschnitts aufweist; und/oder
7.2 relativ zu der Drahtgruppenzustelleinrichtung (44) in einer quer zu der Erstreckung der zugestellten Drahtgruppe (40) gerichteten Höhenrichtung bewegbar ist.

8. Biegevorrichtung (112) nach einem der Ansprüche 6 oder 7,
**dadurch gekennzeichnet,**
**dass** die Flachbiegeeinrichtung (114) ausgewählt ist aus einer Gruppe, die umfasst:
8.1 eine Flachbiegeeinrichtung (114), die ausgebildet ist zum Flachbiegen der Mäanderform (42) im Wesentlichen in einer Ebene;
8.2 eine Flachbiegeeinrichtung (114), die ausgebildet ist zum Umbiegen einer ersten Halbwelle um eine Biegeform und Umbiegen einer zweiten Halbwelle um eine Biegeform;
8.3 eine Flachbiegeeinrichtung (114), die ausgebildet ist zum Biegen der Mäanderform (42) so, dass sich diese im Wesentlichen parallel zu der Erstreckung der bereitgestellten Drahtgruppe (40) erstreckt;
8.4 eine Flachbiegeeinrichtung (114), die ausgebildet ist zum Biegen zumindest des jeweils am weitesten an einer ersten Längsseite der Drahtgruppe (40) befindlichen Drahtes (24a) zu der entgegen gerichteten zweiten Längsseite der Drahtgruppe hin über die verbleibenden Drähte (24b-24f) der Drahtgruppe (40) hinweg;
8.5 eine Flachbiegeeinrichtung (114), die ausgebildet ist zum Biegen der Mäanderform (42) an dem wenigstens einen ersten Draht (24a) der Drahtgruppe (40) unter Übersetzen des wenigstens einen ersten Drahtes (24a) über wenigstens einen zweiten Draht (24b) der Drahtgruppe (40) und zum Biegen der Mäanderform (42) an dem wenigstens einen zweiten Draht (24b) der Drahtgruppe (40) unter Übersetzen des wenigstens einen zweiten Drahts (24b) über den wenigstens einen ersten Draht (24a);
8.6 eine Flachbiegeeinrichtung (114), die ausgebildet ist zum Biegen der Mäanderform (42) an dem wenigstens einen ersten Draht (24a) der Drahtgruppe unter Unterführen des wenigstens einen ersten Drahtes (24a) unter wenigstens einen zweiten Draht (24b) der Drahtgruppe (40) und zum Biegen der Mäanderform (42) an dem wenigstens einen zweiten Draht (24b) der Drahtgruppe (40) unter Unterführen des wenigstens einen zweiten Drahts (24b) unter den wenigstens einen ersten Draht (24a);
8.7 eine Flachbiegeeinrichtung (114), die ausgebildet ist zum Biegen der Mäanderform (42) des ersten und des zweiten Drahtes (24a, 24b) mit gleicher oder unterschiedlicher Mäanderweitenform;
8.8 eine Flachbiegeeinrichtung (114), die ausgebildet ist zum Übereinanderbiegen des jeweils in Taktrichtung vorne liegenden wenigstens einen Drahtes (24a) der Drahtgruppe (40) über die anderen Drähte (24b-24f) der Drahtgruppe (40), um so die Drähte (24a-24f) zu verweben; und
8.9 eine Flachbiegungseinrichtung (114), die dazu ausgebildet ist, das Flachbiegen nacheinander an allen Drähten (24a-24f) der Drahtgruppe (40) zu wiederholen, bis an einem Längenabschnitt der Drahtgruppe (40) Mäanderformen (42) an allen Drähten (24a-24f) der Drahtgruppe (40) gebildet sind; und
8.10 Kombinationen der Flachbiegeeinrichtungen (114) gemäß 8.1 bis 8.9.

9. Biegevorrichtung (112) nach einem der Ansprüche 6 bis 8,
**gekennzeichnet durch** eine Sprungbiegungseinrichtung (118) zum Ausbilden wenigstens einer Kröpfung in dem Drahtabschnitt.

10. Biegevorrichtung (112) nach einem der Ansprüche 6 bis 9,
**dadurch gekennzeichnet,**
**dass** die Querbewegungseinrichtung (68)
10.1 ein insgesamt drehbares Drehmagazin (70) mit darin drehbar gelagerten Drahtunterstützungen (80) zum Halten der Drähte (24a-24f) der Drahtgruppe (40) aufweist; und/oder
10.2 einen in einer Querbewegungsrichtung bewegbaren Greifer (86) zum Erfassen des zu biegenden Drahts (24a) aufweist und ein in die entgegengesetzte Querrichtung bewegbares Stützelement zum gemeinsamen Bewegen der verbleibenden Drähte (24b-24f) in die entgegengesetzte Querrichtung aufweist.

11. Herstellvorrichtung (120) zum Herstellen einer Wellenwicklungsmatte (30a) zum Bilden einer Spulenwicklung (20) eines Bauteils (12) einer elektrischen Maschine, umfassend eine Biegevorrichtung (112) nach einem der Ansprüche 6 bis 10 und eine Steuerung (122), die dazu ausgebildet ist, die Biegevorrichtung (112) zum Durchführen des Herstellverfahrens nach einem der Ansprüche 4 oder 5 anzusteuern.

12. Herstellvorrichtung (120) nach Anspruch 11,
**gekennzeichnet durch** eine oder mehrere der folgenden Einrichtungen:
12.1 eine Isolierungsentfernungseinrichtung (98) zum Abisolieren von Drahtbereichen (108) der Drähte (24, 24a-24f);
12.2 eine Drahtschneideeinrichtung (99) zum Ablängen der Drähte (24) vor dem Biegen;
12.3 ein Puffermagazin (110) zum Lagern der bereitzustellenden Drähte (24); und/oder
12.4 eine Wellenwicklungsmattenaufnahme (124) zum Aufnehmen und Abführen des bereits fertig gestellten Bereichs der Wellenwicklungsmatte (30a).

13. Computerprogrammprodukt, enthaltend maschinenlesbare Steueranweisungen, die, wenn in eine Steuerung (122) einer Herstellvorrichtung (120) nach einem der Ansprüche 11 oder 12 geladen, die Herstellvorrichtung (120) veranlassen, das Verfahren nach einem der Ansprüche 1 bis 5 durchzuführen.

## Claims

1. Bending method for bending wire sections for a wave winding mat (30a) for forming a coil winding (20) of a component (12) of an electrical machine, comprising:
a) providing a wire group (40) of adjacent spaced parallel wires (24, 24a-24f);
b) bending a meander shape (42) on at least one first wire (24a) of the wire group (40) such that simultaneously the at least one first wire (24a) crosses at least one second wire (24b) of the wire group (40); and
c) bending the meander shape (42) on the at least one second wire (24b) of the wire group (40) such that simultaneously the at least one second wire (24b) crosses the at least one first wire (24a),
**characterized in**
**that** step b) and/or step c) includes the step of:
moving a first and a second holder (48a, 48b) towards each other for holding a wire section in a direction of movement directed substantially parallel to the longitudinal direction of the wire group (40), and simultaneously pivoting the first holder (48a) about a first pivot axis (130a) and the at least one second holder (48b) about a second pivot axis (130b), the pivot axes (130a, 130b) being directed substantially perpendicular to the extension of the wire group (40).

2. Bending method according to claim 1,
**characterized in**
**in that** step b) and/or step c) comprises at least one or more of the steps:
bc1) flat bending the meander shape (42) substantially in one plane;
bc2) bending a first half-wave around a bending mold and bending a second half-wave around a bending mold;
bc3) bending the meander shape (42) in a plane extending substantially parallel to the extension of the prepared wire group (40);
bc4) bending at least the respective wire (24a) closest to a first longitudinal side of the wire group (40) toward the oppositely directed second longitudinal side of the wire group (40) over and across the remaining wires (24b-24f) of the wire group (40);
bc5) bending the meander shape (42) on the at least one first wire (24a) of the wire group (40) while placing the at least one wire (24a) over the at least one second wire (24b) of the wire group and bending the meander shape (42) on the at least one second wire (24b) of the wire group (40) while placing the at least one second wire (24b) over the at least one first wire (24a);
bc6) bending the meander shape (42) on the at least one first wire (24a) of the wire group (40) while placing the at least one first wire (24a) under at least one second wire (24b) of the wire group (40) and bending the meander shape (42) on the at least one second wire (24b) of the wire group (40) while placing the at least one second wire (24b) under the at least one first wire (24a);
bc7) forming a bend in a wire section of the first and/or the second wire (24a, 24b) at which a bend of the meander shape (42) is formed or to be formed;
bc8) bending the meander shape (42) of the first and second wires (24a, 24b) with the same or different meander width dimension;
bc9) bending the least one wire (24a) of the wire group, which is ahead in the clock direction, over the other wires (24b-24f) of the wire group (40), so as to interweave the wires (24, 24a-24f);
bc10) relatively moving the respective at least one wire (24a) to be bent relative to the other wires (24b-24f) in a direction transverse to the longitudinal extension of the wires (24, 24a-24f);
bc11) relatively moving the respective at least one wire (24a) to be bent relative to the other wires (24b-24f) in a direction transverse to the longitudinal extension of the wires (24, 24a-24f) by means of a generally rotatable rotary magazine (70) with wire supports (80) rotatably mounted therein, in which the wires (24a-24f) are held;
bc12) relatively moving the respective at least one wire (24a) to be bent relative to the other wires (24b-24f) in a direction transverse to the longitudinal extension of the wires (24, 24a-24f) by means of gripping the wire (24a) to be bent with a gripper (86) moving in the transverse direction and jointly moving the remaining wires (24b-24f) in the opposite transverse direction;
bc13) bending the meander shape (42) on clamping and forming elements (48, 50) which are movable and pivotable relative to one another.

3. Bending method according to any one of the preceding claims,
**characterized in**
**that** steps b) and c) are repeated in succession until meander shapes (42) are formed on all wires (24a-24f) of the wire group (40) at a length section of the wire group.

4. Manufacturing method for manufacturing a wave winding mat (30a) for forming a coil winding (20) of a component (12) of an electrical machine, comprising:
performing the bending process according to any one of the preceding claims on a length portion of the wire group (40) and repeating the bending process on further length portions until the shaft winding mat (30a) is formed in the desired length.

5. Manufacturing method according to claim 4,
**characterized by** at least one or more of the following steps:
5.1 stripping wire portions (108) of the wires (24);
5.2 cutting the wires (24) to a predetermined length prior to the bending process;
5.3 storing the wires (24) to be provided and/or the group of wires (40) to be provided in a buffer magazine (110);
5.4 bending jumps (22) into predetermined sections of at least one or all of the wires (24);
5.5 bending jumps (22) on different sections and/or different wires (24a-24f) of the wire group (40) with different jump directions and/or different offset heights;
5.6 carrying out the bending process in cycles;
5.7 discharging the already completed portion of the wave winding mat (30a) on a wave winding mat receiver (124);
5.8 discharging the already finished portion of the wave winding mat (30a) transversely to the longitudinal extension of the fed wire group (40);
5.9 discharging the already finished portion of the wave winding mat (30a) on a rake (66);
5.10 discharging the already finished portion of the wave winding mat (30a) by synchronously clocking out the wave winding mat (30a).

6. Bending device (112) for use in manufacturing a wave winding mat (30a) for forming a coil winding (20) of a component (12) of an eletrical machine, comprising wire group feeding means (44) for feeding a wire group (40) of wires (24a-24f) arranged parallel side-by-side and spaced from each other, and
a flat bending device (114) for bending a bending portion of at least one wire (24a) of the wire group (40) in a meander shape (42) such that the wire portion simultaneously crosses the remaining wires (24b-24f) of the wire group (40), and
a transverse moving device (68) for relatively moving the at least one wire (24a) to be bent and the remaining wires (24b-24f) in a direction transverse to the longitudinal extension of the wires (24a-24f) fed by the wire group feeding means (44), **characterized in**
**that** the flat bending device (114) comprises a plurality of holders (48a, 48b) for holding a plurality of straight wire sections (34) of the bending portion, which are movable toward and away from each other in a direction of movement and are simultaneously pivotable relative to each other about pivot axes (130a, 130b, 130c) extending substantially transverse to the direction of movement and substantially parallel to each other.

7. Bending device (112) according to claim 6,
**characterized in**
**that** the flat bending device (114)
7.1 comprises a plurality of shaping elements (50) for shaping bent portions (60a-60c) of the bending portion; and/or
7.2 is movable relative to the wire group feeding device (44) in a height direction transverse to the extension of the fed wire group (40).

8. Bending device (112) according to any one of claims 6 or 7,
**characterized in**
**that** the flat bending device (114) is selected from the group comprising:
8.1 a flat bending device (114) adapted for flat bending the meander shape (42) substantially in one plane;
8.2 a flat bending device (114) adapted to bend a first half-wave around a bending mold and bend a second half-wave around a bending mold;
8.3 a flat bending device (114) adapted to bend the meander shape (42) so that it extends substantially parallel to the extension of the prepared wire group (40);
8.4 a flat bending device (114) adapted to bend the respective wire (24a) located furthest along a first longitudinal side of the wire group (40) towards the oppositely directed second longitudinal side of the wire group over and across the remaining wires (24b-24f) of the wire group (40);
8.5 a flat bending device (114) adapted to bend the meander shape (42) on the at least one first wire (24a) of the wire group (40) while placing the at least one first wire (24a) over at least one second wire (24b) of the wire group (40) and to bend the meander shape (42) on the at least one second wire (24b) of the wire group (40) while placing the at least one second wire (24b) over the at least one first wire (24a);
8.6 a flat bending device (114) adapted to bend the meander shape (42) on the at least one first wire (24a) of the wire group while placing the at least one first wire (24a) under at least one second wire (24b) of the wire group (40) and to bend the meander shape (42) on the at least one second wire (24b) of the wire group (40) while placing the at least one second wire (24b) under the at least one first wire (24a);
8.7 a flat bending device (114) adapted to bend the meander shape (42) of the first and second wires (24a, 24b) with the same or different meander width shape;
8.8 a flat bending device (114) adapted to bend the at least one wire (24a) of the wire group (40), which is ahead in the clock direction, over the other wires (24b-24f) of the wire group (40) so as to interweave the wires (24a-24f); and
8.9 a flat bending device (114) adapted to repeat the flat bending successively on all wires (24a-24f) of the wire group (40) until meander shapes (42) are formed on all wires (24a-24f) of the wire group (40) at a length portion of the wire group (40); and 8.10 combinations of the flat bending devices (114) according to 8.1 to 8.9.

9. Bending device (112) according to any one of claims 6 to 8,
**characterized by** a jump bending device (118) for forming at least one bend in said wire section.

10. Bending device (112) according to any one of claims 6 to 9,
**characterized in**
**that** the transverse movement device (68)
10.1 comprises a generally rotatable rotary magazine (70) with wire supports (80) rotatably mounted therein for holding the wires (24a-24f) of the wire group (40); and/or
10.2 has a gripper (86) movable in a transverse direction of movement for gripping the wire (24a) to be bent and has a support member movable in the opposite transverse direction for jointly moving the remaining wires (24b-24f) in the opposite transverse direction.

11. Manufacturing device (120) for manufacturing a wave winding mat (30a) for forming a coil winding (20) of a component (12) of an electrical machine, comprising a bending device (112) according to any one of claims 6 to 10 and a controller (122) adapted to control the bending device (112) for performing the manufacturing process according to any one of claims 4 or 5.

12. Manufacturing device (120) according to claim 11,
**characterized by** one or more of the following devices:
12.1 an insulation removal device (98) for stripping wire portions (108) of the wires (24, 24a-24f);
12.2 a wire cutting device (99) for cutting the wires (24) to length before bending;
12.3 a buffer magazine (110) for storing the wires (24) to be provided; and/or
12.4 a wave winding mat receiver (124) for receiving and discharging the already finished portion of the wave winding mat (30a).

13. Computer program product comprising machine-readable control instructions that, when loaded into a controller (122) of a manufacturing device (120) according to any one of claims 11 or 12, cause the manufacturing device (120) to perform the method according to any one of claims 1 to 5.

## Revendications

1. Procédé de cintrage pour cintrer des sections de fil pour un tapis d'enroulement ondulé (30a) pour former un enroulement de bobine (20) d'un composant (12) d'une machine électrique, comprenant:
a) fournir un groupe de fils (40) composé de fils (24, 24a-24f) juxtaposés parallèlement et espacés les uns des autres;
b) le cintrage d'une forme de méandre (42) sur au moins un premier fil (24a) du groupe de fils (40) de sorte que, simultanément, ledit au moins un premier fil (24a) croise au moins un deuxième fil (24b) du groupe de fils (40), et
c) le cintrage de la forme de méandre (42) sur ledit au moins un deuxième fil (24b) du groupe de fils (40), de sorte que ledit au moins un deuxième fil (24b) croise simultanément ledit au moins un premier fil (24a),
**caractérisé en ce que**
l'étape b) et/ou l'étape c) comprend l'étape:
déplacer l'un vers l'autre un premier et un deuxième support (48a, 48b) pour maintenir une section de fil dans une direction de déplacement qui est dirigée sensiblement parallèlement à la direction longitudinale du groupe de fils (40), et faire pivoter simultanément le premier support (48a) autour d'un premier axe de pivotement (130a) et d'au moins un deuxième axe de pivotement (130b), les axes de pivotement (130a, 130b) étant dirigés sensiblement perpendiculairement à l'extension du groupe de fils (40).

2. Procédé de cintrage selon la revendication 1,
**caractérisé en ce que**
l'étape b) et/ou l'étape c) comprend au moins une ou plusieurs des étapes:
bc1) cintrage à plat de la forme de méandre (42) sensiblement dans un plan;
bc2) cintrage d'une première demi-onde autour d'une moulde de cintrage et
cintrage d'une deuxième demi-onde autour d'une moule de cintrage;
bc3) cintrage de la forme de méandre (42) dans un plan s'étendant sensiblement parallèlement à l'extension du groupe de fils (40) fourni;
bc4) cintrage d'au moins le fil (24a) le plus proche d'un premier côté longitudinal du groupe de fils (40) vers le deuxième côté longitudinal opposé du groupe de fils (40),
par-dessus les fils restants (24b-24f) du groupe de fils (40);
bc5) cintrage de la forme de méandre (42) sur ledit au moins un fil (24a) du groupe de fils (40) en passant ledit au moins un fil (24a) par-dessus ledit au moins un deuxième fil (24b) du groupe de fils et cintrer la forme de méandre (42) sur ledit au moins un deuxième fil (24b) du groupe de fils (40) en passant ledit au moins un deuxième fil (24b) par-dessus ledit au moins un premier fil (24a);
bc6) cintrage de la forme de méandre (42) sur ledit au moins un premier fil (24a) du groupe de fils (40) en passant ledit au moins un fil (24a) sous ledit au moins un deuxième fil (24b) du groupe de fils (40) et cintrer la forme de méandre (42) sur ledit au moins un deuxième fil (24b) du groupe de fils (40) en passant ledit au moins un deuxième fil (24b) sous ledit au moins un premier fil (24a);
bc7) former un coude dans une partie de fil du premier et/ou du deuxième fil (24a, 24b), au niveau duquel un coude de la forme de méandre (42) est formé ou doit être formé;
bc8) cintrage de la forme de méandre (42) du premier et du deuxième fil (24a, 24b) avec une mesure de largeur de méandre identique ou différente;
bc9) recourber l'un sur l'autre le fil (24a) au moins du groupe de fils qui se trouve respectivement en avant dans le sens de la cadence sur les autres fils (24b-24f) du groupe de fils (40) de manière à entrelacer les fils (24, 24a-24f);
bc10) déplacement relatif d'au moins un fil (24a) à cintrer par rapport aux autres fils (24b-24f) dans une direction transversale à l'extension longitudinale des fils (24, 24a-24f);
bc11) déplacement relatif d'au moins un fil (24a) à cintrer par rapport aux autres fils (24b-24f) dans une direction transversale à l'extension longitudinale des fils (24, 24a-24f) au moyen d'un magasin rotatif (70) globalement rotatif avec des supports de fils (80) qui y sont montés de manière rotative et dans lesquels les fils (24a-24f) sont maintenus;
bc12) déplacement relatif d'au moins un fil à cintrer (24a) par rapport aux autres fils (24b-24f) dans une direction transversale à l'extension longitudinale des fils (24, 24a-24f) au moyen d'une saisie du fil à cintrer (24a) avec une pince (86) se déplaçant dans la direction transversale et déplacement commun des fils restants (24b-24f) dans la direction transversale opposée;
bc13) cintrage de la forme de méandre (42) sur des éléments de serrage et de formage (48, 50) mobiles et pivotants les uns par rapport aux autres.

3. Procédé de cintrage selon l'une quelconque des revendications précédentes, **caractérisé en ce que**
les étapes b) et c) sont répétées l'une après l'autre jusqu'à ce que des formes de méandres (42) soient formées sur un tronçon de longueur du groupe de fils (40) sur tous les fils (24a-24f) du groupe de fils.

4. Procédé de fabrication d'un tapis d'enroulement ondulé (30a) pour former un enroulement de bobine (20) d'un composant (12) d'une machine électrique,
comprenant:
la mise en œuvre du procédé de cintrage selon l'une des revendications précédentes sur un tronçon de longueur du groupe de fils (40) et la répétition du procédé de cintrage sur d'autres tronçons de longueur jusqu'à ce que le tapis d'enroulement ondulé (30a) soit formé dans la longueur souhaitée.

5. Procédé de fabrication selon la revendication 4,
**caractérisé par** au moins une ou plusieurs des étapes suivantes:
5.1 dénudage de zones de fils (108) des fils (24);
5.2 mise à longueur des fils (24) à une longueur prédéterminée avant le processus de cintrage;
5.3 stockage des fils (24) à fournir et/ou du groupe de fils (40) à fournir dans un magasin buffer (110);
5.4 cintrage de sauts (22) en sections prédéterminées d'au moins un ou de tous les fils (24);
5.5 cintrage de sauts (22) sur différentes sections et/ou différents fils (24a-24f) du groupe de fils (40) avec différentes directions de saut et/ou différentes hauteurs de décalage;
5.6 exécution cadencée du procédé de cintrage;
5.7 évacuation de la partie déjà finie du tapis d'enroulement ondulé (30a) sur un support de tapis d'enroulement ondulé (124);
5.8 évacuation de la partie déjà finie du tapis d'enroulement ondulé (30a) transversalement à l'extension longitudinale du groupe de fils (40) amené;
5.9 évacuation de la partie déjà finie du tapis d'enroulement ondulé (30a) sur un râteau (66);
5.10 évacuation de la partie déjà finie du tapis d'enroulement ondulé (30a) par temporiser de manière synchrone le tapis d'enroulement ondulé (30a).

6. Dispositif de cintrage (112) destiné à être utilisé dans la fabrication d'un tapis d'enroulement ondulé (30a) pour former un enroulement de bobine (20) d'un composant (12) d'une machine électrique, comprenant
un dispositif d'alimentation en groupes de fils (44) pour alimenter un groupe de fils (40) constitué de fils (24a-24f) juxtaposés parallèlement et espacés les uns des autres, et
un dispositif de cintrage à plat (114) pour cintrer une partie de cintrage d'au moins un fil (24a) du groupe de fils (40) en une forme de méandre (42) de telle sorte que, simultanément, la partie de fil croise les fils restants (24b-24f) du groupe de fils (40), et
un dispositif de déplacement transversale (68) pour déplacer relativement ledit au moins un fil (24a) à cintrer et ceux des fils restants (24b-24f) dans une direction transversale à l'extension longitudinale des fils (24a-24f) délivrés par le dispositif d'alimentation en groupes de fils (44),
**caractérisé en ce que**
le dispositif de cintrage à plat (114) comprend une pluralité de supports (48a, 48b) pour supporter une pluralité de sections de fil rectilignes (34) de la section de cintrage, qui peuvent être rapprochées et éloignées les unes des autres dans une direction de déplacement et qui peuvent pivoter simultanément les unes par rapport aux autres autour d'axes de pivotement (130a, 130b, 130c) sensiblement transversaux à la direction de déplacement et sensiblement parallèles entre eux.

7. Dispositif de cintrage (112) selon la revendication 6,
**caractérisé en ce que**
le dispositif de cintrage à plat (114)
7.1 comprend une pluralité d'éléments de formage (50) pour former des zones cintrées (60a-60c) de la section de cintrage; et/ou
7.2 est mobile par rapport au dispositif d'alimentation en groupes de fils (44) dans une direction en hauteur orientée transversalement à l'extension du groupe de fils (40) alimenté.

8. Dispositif de cintrage (112) selon l'une des revendications 6 ou 7,
**caractérisé en ce que**
le dispositif de cintrage à plat (114) est choisi dans le groupe comprenant:
8.1 un dispositif de cintrage à plat (114) configuré pour cintrer à plat la forme de méandre (42) sensiblement dans un plan;
8.2 un dispositif de cintrage à plat (114) qui est conçu pour cintrer un premier demi-onde autour d'une moule de cintrage et pour cintrer un deuxième demi-onde autour d'une moule de cintrage;
8.3 un dispositif de cintrage à plat (114) qui est conçu pour cintrer la forme de méandre (42) de sorte que celle-ci s'étende essentiellement parallèlement à l'extension du groupe de fils (40) mis à disposition;
8.4 un dispositif de cintrage à plat (114), qui est conçu pour cintrer le fil (24a) se trouvant le plus loin sur un premier côté longitudinal du groupe de fils (40) vers le deuxième côté longitudinal opposé du groupe de fils, par-dessus les fils restants (24b-24f) du groupe de fils (40);
8.5 un dispositif de cintrage à plat (114) qui est conçu pour cintrer la forme de méandre (42) sur ledit au moins un premier fil (24a) du groupe de fils (40) en passant ledit au moins un premier fil (24a) par-dessus au moins un deuxième fil (24b) du groupe de fils (40) et pour cintrer la forme de méandre (42) sur ledit au moins un deuxième fil (24b) du groupe de fils (40) en passant ledit au moins un deuxième fil (24b) par-dessus ledit au moins un premier fil (24a);
8.6 un dispositif de cintrage à plat (114) qui est conçu pour cintrer la forme de méandre (42) sur ledit au moins un premier fil (24a) du groupe de fils en passant ledit au moins un premier fil (24a) sous au moins un deuxième fil (24b) du groupe de fils (40) et pour cintrer la forme de méandre (42) sur ledit au moins un deuxième fil (24b) du groupe de fils (40) et passant ledit au moins un deuxième fil (24b) sous ledit au moins un premier fil (24a);
8.7 un dispositif de cintrage à plat (114) qui est conçu pour cintrer la forme de méandre (42) du premier et du deuxième fil (24a, 24b) avec une forme de largeur d'onde de méandre identique ou différente;
8.8 un dispositif de cintrage à plat (114) qui est conçu pour cintrer l'un sur l'autre ledit au moins un fil (24a) du groupe de fils (40) situé respectivement à l'avant dans le sens de la cadence sur les autres fils (24b-24f) du groupe de fils (40), afin d'entrelacer ainsi les fils (24a-24f); et
8.9 un dispositif de cintrage à plat (114) adapté pour répéter le cintrage à plat successivement sur tous les fils (24a-24f) du groupe de fils (40) jusqu'à ce que des formes de méandres (42) soient formées sur tous les fils (24a-24f) du groupe de fils (40) sur une tronçon de longueur du groupe de fils (40); et
8.10 combinaisons des dispositifs de cintrage à plat (114) selon 8.1 à 8.9.

9. Dispositif de cintrage (112) selon l'une quelconque des revendications 6 à 8, **caractérisé par** un dispositif de cintrage de saut (118) pour former au moins un coude dans la section de fil.

10. Dispositif de cintrage (112) selon l'une quelconque des revendications 6 à 9, **caractérisé en ce que**
le dispositif de déplacement transversal (68)
10.1 comporte un magasin rotatif (70) globalement rotatif, dans lequel sont montés de manière rotative des supports de fils (80) destinés à maintenir les fils (24a-24f) du groupe de fils (40); et/ou
10.2 présente une pince (86) mobile dans une direction de déplacement transversale pour saisir le fil (24a) à cintrer et présente un élément de support mobile dans la direction transversale opposée pour déplacer ensemble les fils restants (24b-24f) dans la direction transversale opposée.

11. Dispositif de fabrication (120) pour fabriquer un tapis d'enroulement ondulé (30a) pour former un enroulement de bobine (20) d'un composant (12) d'une machine électrique, comprenant un dispositif de cintrage (112) selon l'une quelconque des revendications 6 à 10 et un dispositif de commande (122) configuré pour commander le dispositif de cintrage (112) pour mettre en œuvre le procédé de fabrication selon l'une quelconque des revendications 4 ou 5.

12. Dispositif de fabrication (120) selon la revendication 11,
**caractérisé par** un ou plusieurs des dispositifs suivants:
12.1 un dispositif d'enlèvement d'isolation (98) pour dénuder des zones de fils (108) des fils (24, 24a-24f);
12.2 un dispositif de coupe de fil (99) pour couper les fils (24) à la longueur voulue avant de les cintrer;
12.3 un magasin buffer (110) pour stocker les fils (24) à fournir; et/ou
12.4 un logement de tapis d'enroulement ondulé (124) pour recevoir et évacuer la partie déjà finie du tapis d'enroulement ondulé (30a).

13. Produit programme d'ordinateur comprenant des instructions de commande lisibles par une machine qui, lorsqu'elles sont chargées dans un dispositif de commande (122) d'un dispositif de fabrication (120) selon l'une des revendications 11 ou 12, amènent le dispositif de fabrication (120) à mettre en œuvre le procédé selon l'une des revendications 1 à 5.
